# EUROPEAN PATENT SPECIFICATION

(11) **EP 1 227 120 B1**
(45) Date of publication and mention of the grant of the patent: **25.12.2013**
(21) Application number: 01000664.1
(22) Date of filing: 27.11.2001
(51) Int. Cl.: C09D 201/02, C08J 7/04, B05D 1/18

(54) **Process for modifying a surface**
Verfahren zur Modifizierung einer Oberfläche
Procédé pour la modification d'une surface

(30) Priority: 24.01.2001 EP 01810061
(43) Date of publication of application: 31.07.2002
(73) Proprietor: Novartis AG, 4056 Basel (CH)
(72) Inventor: Lohmann, Dieter, 4142, Münchenstein (CH); Chabrecek, Peter, 4125, Riehen (CH); Leukel, Jörg, 79110, Freiburg (DE)
(74) Representative: Bohest AG

(56) References cited:
- WO-A-02/32590
- WO-A-99/57581
- US-A- 4 309 453
- DATABASE WPI Section Ch, Week 199401 Derwent Publications Ltd., London, GB; Class A13, AN 1994-002342 XP002169462 & JP 05 310979 A (TERUMO CORP), 22 November 1993 (1993-11-22)
- PATENT ABSTRACTS OF JAPAN vol. 012, no. 252 (C-512), 15 July 1988 (1988-07-15) & JP 63 041541 A (AGENCY OF IND SCIENCE & TECHNOL), 22 February 1988 (1988-02-22)

## Description

The present invention relates to a process for coating articles, wherein the coating comprises a polymer having desirable characteristics regarding adherence to the substrate, durability, softness, hydrophilicity, lubricity, wettability, biocompatibility and permeability. More particular, the present invention relates to a process for coating an article, such as a biomedical material or article, especially ophthalmic devices such as ocular implants, artificial corneas and contact lenses including an extended-wear contact lens, wherein at least a part of the coating comprises a polymer having a "bottle-brush" or comb type structure. The inventive coatings are obtainable from preformed comb-type polymers having photoreactive groups linked pendently to the polymer backbone by applying them onto a substrate surface and then fixing them using irradiation. The resulting coatings are composed of hairy highly hydrophilic polymer chains or highly branched polymer chains which form covalently bound and loosely crosslinked highly water containing networks with an overall large void volume.

A variety of different types of processes for preparing hydrophilic polymeric coatings on an "inert" hydrophobic substrate have been disclosed in the prior art. For example, WO 99/57581 discloses to first of all provide the article surface with covalently bound photoinitiator molecules, coating the modified surface with a layer of a polymerizable macromonomer and then subjecting it to a heat or radiation treatment whereby the macromonomer is graft polymerized thus forming the novel article surface. The known surface modification process is applicable only to articles having a functionalized surface, that is to say, the surface of the article either inherently contains functional groups or the functional groups have to be introduced previously by a plasma treatment.

A plasma treatment as part of a high volume production requires a considerable investment in equipment and is furthermore difficult to be integrated in an automated production process. For example, a plasma treatment requires usually high vacuum conditions; in addition the article to be treated must be dry before exposure to the plasma. Thus, a polymeric article such as a contact lens that is wet from prior hydration or extraction must be dried previously, thereby adding time in the overall lens production process as well as imposing added costs of obtaining a drying equipment. In addition, drying a hydrogel type contact lens often affects its shape and optical quality in an irreversible manner. Therefore, it would be highly desirable to initiate the covalent binding of a hydrophilic layer to an "inert" surface such that the plasma treatment is avoided and replaced by a technique which is easy to perform with standard equipment under ambient conditions, and which is thus more feasible for an automated production process.

Other processes known in the art for preparing hydrophilic polymeric coatings on an inert hydrophobic substrate are the following:
US-A-4309453 discloses surface modification of natural or synthetic macromolecular substrates with organic compounds having hydrophilic, hydrophobic, oleophobic, ionic and/or cross-linkable groups and having groups which are easily convertible to nitrene or carbene, e.g., azide or diazo groups. Said organic compounds are applied to the surface to be modified as a monolayer or oligolayer from a solution thereof and then are photochemically activated.

JP-A-5310979 discloses a precursor polymer (preferably a polyallylamine into which p-azidobenzoic acid is introduced) having a photoreactive group which is bound to the surface of an organic material such as PVC or polyethylene through photochemical bonding.

JP-A-63041541 discloses a chitosan component which is dissolved in a dilute aqueous solution of an acid, a reagent capable of generating nitrene or carbene is added thereto to give a coating solution containing 0.1-3wt% chitosan concentration and 0.1-20wt% acid concentration, which is applied to a molded polymer articles (e.g. polyethylene fiber) and dried. The resultant surface is then irradiated with light to react the compound capable of generating nitrene (carbene) with amino groups in the chitosan component, to form covalent bonds between the chitosan component and the molded high polymer article.

Surprisingly, now there have been found branched reactive polymer derivatives which are able to react with the surface of articles being devoid of functional groups. By means of said polymers it is possible to obtain articles, particularly biomedical devices such as, for example, contact lenses, with an improved wettability, water-retention ability, surface lubricity and biocompatibility as well as high wearing comfort and longterm overall on-eye performance.

The present invention therefore in one aspect relates to a process for coating a material surface comprising the steps of:
(a) applying to the material surface one or more different comb-type polymers comprising a polymer backbone and side chains pendently attached thereto, wherein at least a part of the side chains carry a triggerable precursor for carbene or nitrene formation; and
(b) fixing the polymer(s) onto the material surface using heat or radiation, in particular radiation such as UV or visible light wherein the polymer backbone according to step (a) of the process comprises a polyvinyl homo- or copolymer, a polyethylene imine, a polypeptide, a polyether or a polysaccharide and the side chains that are attached to the polymer backbone are functional hydrophilic telomers, polyalkylene oxides, oligosaccharides or oligopeptides.

The comb-type polymer according to step (a) of the process is
(I) a polyvinyl polymer comprising units of the formula 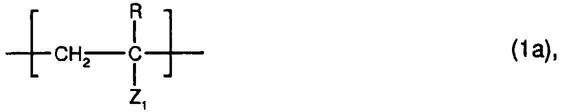 or 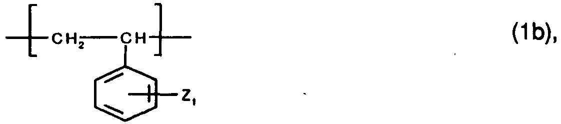 wherein R is hydrogen or C₁-C₄-alkyl and Z₁ is a hydrophilic side chain comprising at least one triggerable precursor for carbene or nitrene formation and having a weight average molecular weight of ≥ 200; or
(II) a polyethylene imine comprising units of formula 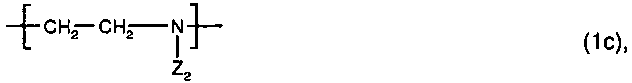 wherein Z₂ is a hydrophilic side chain comprising at least one triggerable precursor for carbene or nitrene formation and having a weight average molecular weight of ≥ 200; or
(III) a polypeptide comprising units of formula 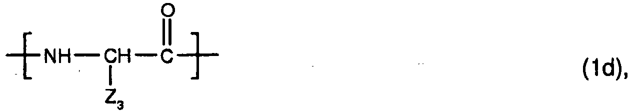 wherein Z₃ is a hydrophilic side chain comprising at least one triggerable precursor for carbene or nitrene formation and having a weight average molecular weight of ≥ 200
(IV) a polyether comprising, for example, units of formula 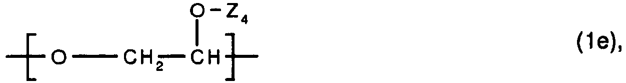 wherein Z₄ is a hydrophilic side chain comprising at least one triggerable precursor for carbene or nitrene formation and having a weight average molecular weight of ≥ 200, or
(V) a polysaccharide comprising saccharide units to which is attached a side chain Z₅ comprising at least one triggerable precursor for carbene or nitrene formation and having a weight average molecular weight of ≥ 200.

A suitable side chain Z₁ of the vinyl polymers (I) is, for example, of formula 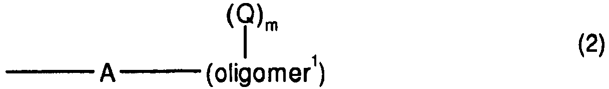 wherein
A is a radical of formula

- C(O) - X - (2a),

- C(O) - O - (CH₂)ᵣ - CH(OH) - CH₂ - X - (2b),

- C(O) - NH - (alk') - C(O) - X - (2c),

- C(O) - O - (alk") - NH - C(O) - X - (2d),

- C(O) - X - (alk") - X₁ - C(O) - (2e),

- C(O) - NH - C(O) - X - (2f),

- (alk"')ₛ - X - D - X₁ - (2g)

- X - (alk') - X₁ - (2h),

- X - C(O) - (2i),

- <alk"'> - C(O) - X - (2j)

or

- <alk"'> - X - C(O) - (2k),

(alk') is C₁-C₆-alkylene; (alk") is C₂-C₁₂-alkylene; (alk"') is C₁-C₆-alkylene; D is a group -C(O)-or -C(S)- and s is 0 or 1; X and X₁ are each independently a group -O- or -NR₁-, wherein R₁ is hydrogen or C₁-C₄-alkyl;
(oligomer¹) is the radical of
(i) a hydrophilic telomer which is derived from one or more different copolymerizable vinyl monomers,
(ii) the radical of an oligosaccharide;
(iii) the radical of an oligopeptide; or
(iv) the radical of a polyalkylene oxide;
Q is a radical comprising a triggerable precursor for carbene or nitrene formation;
r is an integer from 1 to 4; and m is an integer ≥ 1.
Formulae (2a) -(2k) are to be understood, that the left bond is in each case directed to the C-atom of the polymer backbone, and the right bond is directed to (oligomer¹).

R is preferably hydrogen or methyl.
In case that X is a group -NR₁-, R₁ is preferably hydrogen, methyl or ethyl, in particular hydrogen. X and X₁ are each independently preferably a group -O- or -NH-. X and X₁ in formula (2e) are each preferably a group -O-.
(alk") is preferably C₂-C₆-alkylene, more preferably C₂-C₄-alkylene and particularly preferably 1,2-ethylene.
(alk') is preferably methylene, 1,2-ethylene or 1,1-dimethyl-methylene, in particular a radical -CH₂- or -C(CH₃)₂-.
(alk"') is preferably C₁-C₄-alkylene, more preferably C₁-C₂-alkylene and in particular methylene.
r is preferably the number 2 or 3, in particular 2.
Variable A is preferably a radical of the above formula (2a), (2c), (2d), (2i) or (2k), wherein the above given meanings and preferences apply for the variables contained therein.
Variable A is particularly preferably a radical of the above formula (2a), (2d) or (2k), wherein X is -NH-, (alk") is 1,2-ethylene, and (alk"') is methylene.

(oligomer¹) as a telomer radical (i) is, for example, of formula 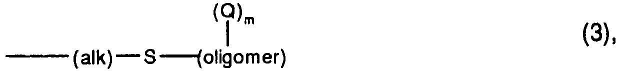 wherein for (alk) independently the meanings and preferences given above for (alk") apply and (oligomer)-(Q)ₘ corresponds, for example, to formula 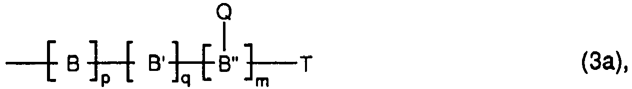 wherein B and B' are each independently of the other a 1,2-ethylene radical derivable from a copolymerizable vinyl monomer that is substituted by a hydrophilic substituent by replacing the vinylic double bond by a single bond,
B" is a 1,2-ethylene radical derivable from a copolymerizable vinyl monomer by replacing the vinylic double bond by a single bond,
p and q are each independently of another an integer from 0 to 250, wherein the total of (p+q) is an integer from 2 to 250,
T is a monovalent group that is suitable to act as a polymerization chain-reaction terminator, and Q and m are as defined above.
T may be derived from any radical being present in the underlying polymerization reaction and is, for example, hydrogen.

The total of (p+q) is preferably an integer from 2 to 150, more preferably from 5 to 100, even more preferably from 5 to 75 and particularly preferably from 10 to 50. In one preferred embodiment, q is 0 and p is an integer from 2 to 249, preferably from 3 to 149, more preferably from 4 to 99 and particularly preferably from 9 to 49. In another preferred embodiment, p and q are each independently an integer of ≥ 1 and the sum of (p+q) is an integer from 2 to 249, preferably from 3 to 149, more preferably from 4 to 99 and especially from 9 to 49.

m is preferably a number from 1 to 3, and especially from 1 to 2.

Suitable hydrophilic substituents of the radicals B or B' may be non-ionic, anionic, cationic or zwitterionic substituents. Accordingly, the telomer chain of formula (3a) may be a charged chain containing anionic, cationic and/or zwitterionic groups or may be an uncharged chain. In addition, the telomer chain may comprise a copolymeric mixture of uncharged and charged units. The distribution of the charges within the telomer, if present, may be random or blockwise.

In one preferred embodiment, the telomer radical of formula (3a) is composed solely of non-ionic monomer units B and/or B'. In another preferred embodiment, the telomer radical of formula (3a) is composed solely of ionic monomer units B and/or B', for example solely of cationic monomer units or solely of anionic monomer units. Still another preferred embodiment is directed to telomer radicals of formula (3a) comprising nonionic units B and ionic units B'.

Suitable non-ionic substituents of B or B' include for example a radical C₁-C₆-alkyl which is substituted by hydroxy or C₁-C₄-alkoxy; phenyl which is substituted by hydroxy or C₁-C₄-alkoxy; a radical -COOY, wherein Y is C₁-C₂₄-alkyl which is unsubstituted or substituted, for example, by hydroxy, C₁-C₄-alkoxy, -O-Si(CH₃)₃, a radical -O-(CH₂CH₂O)₁₋₂₄-E wherein E is hydrogen or C₁-C₆-alkyl, or a radical -NH-C(O)-O-G, wherein -O-G is the radical of a saccharide with 1 to 8 sugar units or is a radical -O-(CH₂CH₂O)₁₋₂₄-E, wherein E is as defined above; -CONY₁Y₂ wherein Y₁ and Y₂ are each independently hydrogen, C₁-C₁₂-alkyl, which is unsubstituted or substituted for example by hydroxy, C₁-C₄alkoxy or a radical -O-(CH₂CH₂O)₁₋₂₄-E wherein E is as defined above, or Y₁ and Y₂ together with the adjacent N-atom form a five- or six-membered heterocyclic ring having no additional heteroatom or one additional oxygen or nitrogen atom; a radical -OY₃, wherein Y₃ is hydrogen, C₁-C₂-alkyl or a radical -C(O)-C₁-C₄-alkyl; or a five- to seven-membered heterocyclic radical having at least one N-atom and being bound in each case via said nitrogen atom.

Suitable anionic substituents of B or B' include for example C₁-C₆-alkyl which is substituted by -SO₃H, -OSO₃H, -OPO₃H₂ or -COOH; phenyl which is substituted by one or more same or different substituents selected from the group consisting of -SO₃H, -COOH, -OH and -CH₂-SO₃H; -COOH; a radical -COOY₄, wherein Y₄ is C₁-C₂₄-alkyl which is substituted for example by -COOH, -SO₃H, -OSO₃H, -OPO₃H₂ or by a radical -NH-C(O)-O-G' wherein G' is the radical of an anionic carbohydrate; a radical -CONY₅Y₆ wherein Y₅ is C₁-C₂₄-alkyl which is substituted by -COOH, -SO₃H, -OSO₃H, or -OPO₃H₂ and Y₆ independently has the meaning of Y₅ or is hydrogen or C₁-C₁₂-alkyl; or -SO₃H; or a salt thereof, for example a sodium, potassium, ammonium salt thereof.

Suitable cationic substituents of B or B' include -NR₂₃R₂₃' or C₁-C₁₂-alkyl which is substituted by a radical -NR₂₃R₂₃' or -NR₂₃R₂₃'R₂₃"⁺An⁻, wherein R₂₃, R₂₃' and R₂₃" are each independently of another hydrogen or unsubstituted or hydroxy-substituted C₁-C₆-alkyl or phenyl, and An⁻ is an anion; or a radical -C(O)NHY₇ or -C(O)OY₇, wherein Y₇ is C₁-C₂₄-alkyl which is substituted by -NR₂₃R₂₃' or -NR₂₃R₂₃'R₂₃"⁺An⁻ and is further unsubstituted or substituted, for example, by hydroxy, wherein R₂₃ R₂₃', R₂₃" and An⁻ are as defined above.

Suitable zwitterionic substituents of B or B' include a radical -R₂₄-Zw, wherein R₂₄ is a direct bond or a functional group, for example a carbonyl, carbonate, amide, ester, dicarboanhydride, dicarboimide, urea or urethane group; and Zw is an aliphatic moiety comprising one anionic and one cationic group each.

The following preferences apply to the hydrophilic substituents of B and B':

### (i) non-ionic substituents:

Preferred alkyl substituents of B or B' are C₁-C₄-alkyl, in particular C₁-C₂-alkyl, which is substituted by hydroxy.
In case that the hydrophilic substituent of B or B' is a radical -COOY, Y as optionally substituted alkyl is preferably C₁-C₁₂-alkyl, more preferably C₁-C₆-alkyl, even more preferably C₁-C₄-alkyl and particularly preferably C₁-C₂-alkyl, each of which being unsubstituted or substituted by hydroxy. Examples of suitable saccharide substituents -O-G of the alkyl radical Y that is substituted by -NH-C(O)-O-G are the radical of a mono- or disaccharide, for example glucose, acetyl glucose, methyl glucose, glucosamine, N-acetyl glucosamine, glucono lactone, mannose, galactose, galactosamine, N-acetyl galactosamine, fructose, maltose, lactose, fucose, saccharose or trehalose, the radical of an anhydrosaccharide such as levoglucosan, the radical of a glucosid such as octylglucosid, the radical of a sugar alcohol such as sorbitol, the radical of a sugar acid derivative such as lactobionic acid amide, or the radical of an oligosaccharide with a maximum of 8 sugar units, for example fragments of a cyclodextrin, starch, chitosan, maltotriose or maltohexaose. The radical -O-G preferably denotes the radical of a mono- or disaccharide or the radical of a cyclodextrin fragment with a maximum of 8 sugar units. Particular preferred saccharide radicals -O-G are the radical of trehalose or the radical of a cyclodextrin fragment. In case that the alkyl radical Y is substituted by a radical -O-(CH₂CH₂O)₁₋₂₄-E or -NH-C(O)-O-G wherein -O-G is -O-(CH₂CH₂O)₁₋₂₄-E, the number of (CH₂CH₂O) units is preferably from 1 to 12 in each case and more preferably from 2 to 8. E is preferably hydrogen or C₁-C₂-alkyl.

Preferred nonionic radicals -COOY are those wherein Y is C₁-C₄-alkyl; or C₂-C₆-alkyl which is substituted by one or two substituents selected from the group consisting of hydroxy, C₁-C₂-alkoxy and -O-Si(CH₃)₃; or Y is a radical -CH₂CH₂-O-(CH₂CH₂O)₁₋₁₂-E wherein E is hydrogen or C₁-C₂-alkyl; or is a radical -C₂-C₄-alkylene-NH-C(O)-O-G, wherein -O-G is the radical of a saccharide.

More preferred non-ionic radicals -COOY are those wherein Y is C₁-C₂-alkyl, hydroxy-substituted C₂-C₄-alkyl, or a radical -CH₂CH₂-O-(CH₂CH₂O)₁₋₁₂-E, wherein E is hydrogen or C₁-C₂-alkyl; or is a radical -C₂-C₄-alkylene-NH-C(O)-O-G wherein -O-G is the radical of a saccharide.

Particularly preferred radicals -COOY comprise those wherein Y is C₁-C₂-alkyl, particularly methyl; or C₂-C₃-alkyl, which is unsubstituted or substituted by hydroxy, or is a radical -C₂-C₃-alkylene-NH-C(O)-O-G wherein -O-G is the radical of trehalose or the radical of a cyclodextrin fragment with a maximum of 8 sugar units.

Preferred non-ionic substituents -C(O)-NY₁Y₂ of B or B' are those wherein Y₁ and Y₂ are each independently of the other hydrogen or C₁-C₄-alkyl which is unsubstituted or substituted by hydroxy; or Y₁ and Y₂ together with the adjacent N-atom form a heterocyclic 6-membered ring having no further heteroatom or having one further N- or O-atom. Even more preferred meanings of Y₁ and Y₂, independently of each other, are hydrogen, C₁-C₂-alkyl or C₂-C₄-alkyl which is substituted by hydroxy; or Y₁ and Y₂ together with the adjacent N-atom form a N-C₁-C₂-alkylpiperazino or morpholino ring. Particularly preferred non-ionic radicals -C(O)-NY₁Y₂ are those wherein Y₁ and Y₂ are each independently of the other hydrogen, C₁-C₂-alkyl or hydroxy-C₂-C₃-alkyl; or Y₁ and Y₂ together with the adjacent N-atom form a morpholino ring.

Preferred non-ionic substituents -OY₃ of B or B' are those wherein Y₃ is hydrogen, C₁-C₂-alkyl or a group -C(O)C₁-C₂-alkyl. Y₃ is particularly preferred hydrogen or acetyl.

Preferred non-ionic heterocyclic substituents of B or B' are a 5- or 6-membered heteroaromatic or heteroaliphatic radical having one N-atom and in addition no further heteroatom or an additional N- or O- heteroatom, or is a 5 to 7-membered lactame. Examples of such heterocyclic radicals are N-pyrrolidonyl, 2- or 4-pyridinyl, 2-methyl pyridin-5-yl, 2-, 3- oder 4-hydroxypyridinyl, N-ε-caprolactamyl, N-imidazolyl, 2-methylimidazol-1-yl, N-morpholinyl or 4-N-methylpiperazin-1-yl, particularly N-morpholinyl or N-pyrrolidonyl.

A group of preferred non-ionic substituents of B or B' comprises C₁-C₂-alkyl, which is unsubstituted or substituted by -OH; a radical -COOY wherein Y is C₁-C₄-alkyl, hydroxy-substituted C₂-C₄-alkyl, or a radical -C₂-C₄-alkylene-NH-C(O)-O-G, wherein -O-G is the radical of a saccharide; a radical -C(O)-NY₁Y₂, wherein Y₁ and Y₂ are each independently of the other hydrogen or C₁-C₄-alkyl which is unsubstituted or substituted by hydroxy, or Y₁ and Y₂ together with the adjacent N-atom form a heterocyclic 6-membered ring having no further heteroatom or having one further N- or O-atom; a radical -OY₃, wherein Y₃ is hydrogen, C₁-C₄-alkyl or a group -C(O)C₁-C₂-alkyl; or a 5- or 6-membered heteroaromatic or heteroaliphatic radical having one N-atom and in addition no further heteroatom or an additional N-, O- or S-heteroatom, or a 5 to 7-membered lactame.

A group of more preferred non-ionic substituents of B or B' comprises a radical -COOY, wherein Y is C₁-C₂-alkyl, hydroxy-C₂-C₃-alkyl, or a radical -C₂-C₄-alkylene-NH-C(O)-O-G, wherein -O-G is the radical of trehalose; a radical -CO-NY₁Y₂, wherein Y₁ and Y₂ are each independently of the other hydrogen, C₁-C₂-alkyl or hydroxy-C₂-C₃-alkyl, or Y₁ and Y₂ together with the adjacent N-atom form a N-C₁-C₂-alkylpiperazino or morpholino ring; or a heterocyclic radical selected from the group consisting of N-pyrrolidonyl, 2- or 4-pyridinyl, 2-methylpyridin-5-yl, 2-, 3- oder 4-hydroxypyridinyl, N-ε-caprolactamyl, N-imidazolyl, 2-methylimidazol-1-yl, N-morpholinyl and 4-N-methylpiperazin-1-yl.

A particularly preferred group of non-ionic substituents of B or B' comprises the radicals -CONH₂, -CON(CH₃)₂, 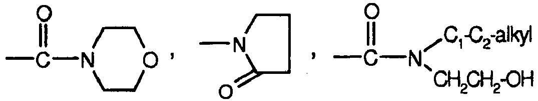 , -CONH-(CH₂)₂-OH, and -COO(CH₂)₂₋₄-NHC(O)-O-G wherein -O-G is the radical of trehalose. Especially preferred non-ionic substituents of B or B' are -CONH₂, -CON(CH₃)₂ and N-pyrrolidonyl.

### (ii) anionic substituents:

Preferred anionic substituents of B or B' are C₁-C₄-alkyl, in particular C₁-C₂-alkyl, which is substituted by one or more substituents selected from the group consisting of -SO₃H and -OPO₃H₂, for example -CH₂-SO₃H; phenyl which is substituted by -SO₃H or sulfomethyl, for example o-, m- or p-sulfophenyl or o-, m- or p-sulfomethylphenyl; -COOH; a radical -COOY₄, wherein Y₄ is C₂-C₆-alkyl which is substituted by - COOH, -SO₃H, -OSO₃H, -OPO₃H₂, or by a radical -NH-C(O)-O-G' wherein G' is the radical of lactobionic acid, hyaluronic acid or sialic acid, in particular C₂-C₄-alkyl which is substituted by -SO₃H or -OSO₃H; a radical -CONY₅Y₆ wherein Y₅ is C₁-C₆-alkyl substituted by sulfo, in particular C₂-C₄-alkyl substituted by sulfo, and Y₆ is hydrogen, for example the radical -C(O)-NH-C(CH₃)₂-CH₂-SO₃H; or -SO₃H; or a suitable salt thereof. Particular preferred anionic substituents of B or B' are -COOH, -SO₃H, o-, m- or p-sulfophenyl, o-, m- or p-sulfomethylphenyl or a radical -CONY₅Y₆ wherein Y₅ is C₂-C₄-alkyl substituted by sulfo and Y₆ is hydrogen, especially -COOH.

### (iii) cationic substituents:

Preferred cationic substituents of B or B' are -NR₂₃R₂₃'; C₁-C₄-alkyl, in particular C₁-C₂-alkyl, which is in each case substituted by -NR₂₃R₂₃' or -NR₂₃R₂₃'R₂₃"⁺An⁻; or a radical -C(O)NHY₇ or -C(O)OY₇ wherein Y₇ is C₂-C₆-alkyl, in particular C₂-C₄-alkyl, which is in each case substituted by-NR₂₃R₂₃' or -NR₂₃R₂₃'R₂₃"⁺An⁻ and is further unsubstituted or substituted by hydroxy; wherein R₂₃, R₂₃' and R₂₃" are each independently of another preferably hydrogen, C₁-C₄-alkyl or hydroxy-substituted C₁-C₄-alkyl and more preferably hydrogen, methyl, ethyl or mono- or dihydroxy C₂-C₃-alkyl. Examples of suitable anions An⁻ are Hal⁻, wherein Hal is halogen, for example Br⁻, F⁻, J⁻ or particularly Cl⁻, furthermore HCO₃⁻, CO₃²⁻, H₂PO₃⁻, HPO₃²⁻, PO₃³⁻, HSO₄⁻, SO₄²⁻ or the radical of an organic acid such as OCOCH₃⁻. Particularly preferred cationic substituents of B or B' are -NH₂, -CH₂-NH₂, -CH₂-N(CH₃)₂, -CH₂-NH-CH₂-CH(OH)-CH₂-OH, -C(O)NH-(CH₂)₂₋₃-NH₂, -C(O)O-(CH₂)₂₋₃-NH₂, -COO-(CH₂)₂-N(CH₃)₂ or -C(O)O-CH₂-CH(OH)-CH₂-N(CH₃)₃⁺An⁻, wherein An⁻ is an anion. Especially preferred cationic substituents of B or B' are -NH₂, -C(O)NH-(CH₂)₂₋₃-NH₂, -C(O)O-(CH₂)₂₋₃-NH₂ or -CH₂-NH-CH₂-CH(OH)-CH₂-OH.

### (iv) zwitterionic substituents -R₂₄-Zw:

R₂₄ is a preferably a carbonyl, ester or amide functional group and more preferably an ester group -C(O)-O-.
Suitable anionic groups of the moiety Zw are for example -COO⁻, -SO₃⁻, -OSO3⁻, -OPO₃H⁻ or bivalent -O-PO₂⁻- or -O-PO₂⁻-O-, preferably a group -COO⁻ or -SO₃⁻ or a bivalent group -O-PO₂⁻-, and in particular a group -SO3⁻.
Suitable cationic groups of the moiety Zw are for example a group -NR₂₃R₂₃'R₂₃"⁺ or a bivalent group -NR₂₃R₂₃^{'+}-, wherein R₂₃, R₂₃' and R₂₃" are as defined above, and are each independently of the other, preferably hydrogen or C₁-C₆-alkyl, preferably hydrogen or C₁-C₄-alkyl and most preferably each methyl or ethyl.

The moiety Zw is for example C₂-C₃₀-alkyl, preferably C₂-C₁₂-alkyl, and more preferably C₃-C₈-alkyl, which is in each case uninterrupted or interrupted by -O- and substituted or interrupted by one of the above-mentioned anionic and cationic groups each, and, in addition, is further unsubstituted or substituted by a radical -OY₈, wherein Y₈ is hydrogen or the acyl radical of a carboxylic acid.

Y₈ is preferably hydrogen or the acyl radical of a higher fatty acid.

Zw is preferably C₂-C₁₂-alkyl and even more preferably C₃-C₈-alkyl which is substituted or interrupted by one of the above-mentioned anionic and cationic groups each, and in addition may be further substituted by a radical -OY₈.

A preferred group of zwitter-ionic substituents -R₂₄-Zw corresponds to the formula

-C(O)O-(Alk"')-N(R₂₃)₂⁺-(Alk')-An⁻

or

-C(O)O-(Alk")-O-PO₂⁻-(O)₀₋₁-(Alk"')-N(R₂₃)₃⁺

wherein R₂₃ is hydrogen or C₁-C₆-alkyl; An' is an anionic group -COO⁻, -SO₃⁻, -OSO₃⁻ or -OPO₃H⁻, preferably -COO⁻ or -SO₃⁻ and most preferably -SO₃⁻, (Alk') is C₁-C₁₂-alkylene, (Alk") is C₂-C₂₄-alkylene which is unsubstituted or substituted by a radical -OY₈, Y₈ is hydrogen or the acyl radical of a carboxylic acid, and (Alk''') is C₂-C₈-alkylene.

(Alk') is preferably C₂-C₈-alkylene, more preferably C₂-C₆-alkylene and most preferably C₂-C₄-alkylene. (Alk") is preferably C₂-C₁₂-alkylene, more preferably C₂-C₆-alkylene and particularly preferably C₂-C₃-alkylene which is in each case unsubstituted or substituted by hydroxy or by a radical -OY₈. (Alk"') is preferably C₂-C₄-alkylene and more preferably C₂-C₃-alkylene. R₂₃ is hydrogen or C₁-C₄-alkyl, more preferably methyl or ethyl and particularly preferably methyl. A preferred zwitterionic substituent of B or B' is of formula

-C(O)O-CH₂-CH(OY₈)-CH₂-O-PO₂⁻-(CH₂)₂-N(CH₃)₃⁺,

wherein Y₈ is hydrogen or the acyl radical of a higher fatty acid.

B denotes for example a radical of formula 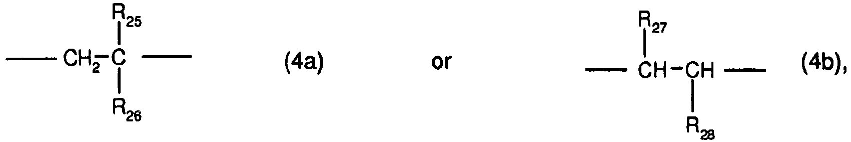 preferably a radical of formula (4a), wherein R₂₅ is hydrogen or C₁-C₄-alkyl, preferably hydrogen or methyl; R₂₆ is a hydrophilic substituent, wherein the above given meanings and preferences apply; R₂₇ is C₁-C₄-alkyl, phenyl or a radical -C(O)OY₉, wherein Y₉ is hydrogen or unsubstituted or hydroxy-substituted C₁-C₄-alkyl; and R₂₈ is a radical -C(O)OY₉' or -CH₂-C(O)OY₉' wherein Y₉' independently has the meaning of Y₉.

R₂₇ is preferably C₁-C₂-alkyl, phenyl or a group -C(O)OY₉. R₂₈ is preferably a group -C(O)OY₉' or -CH₂-C(O)OY₉' wherein Y₉ and Y₉' are each independently of the other hydrogen, C₁-C₂-alkyl or hydroxy-C₁-C₂-alkyl. Particularly preferred -CHR₂₇-CHR₂₈- units are those wherein R₂₇ is methyl or a group -C(O)OY₉ and R₂₈ is a group -C(O)OY₉' or -CH₂-C(O)OY₉' wherein Y₉ and Y₉' are each hydrogen, C₁-C₂-alkyl or hydroxy-C₁-C₂-alkyl.

B' independently may have one of the meanings given above for B.

A suitable substituent Q of the radical (oligomer¹), (oligomer) or B" is, for example, of formula 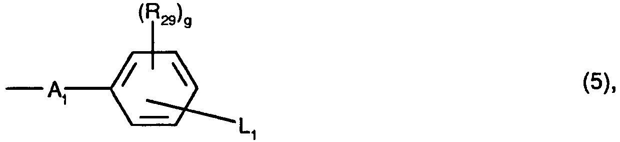 wherein R₂₉ is C₁-C₄-alkyl, C₁-C₄-alkoxy, amino, hydroxy, sulfo, nitro, trifluoromethyl or halogen,
g is an integer from 0 to 2,
L₁ is a group, which functions as a triggerable precursor for carbene or nitrene formation, and
A₁ is a linking member, for example, of formula

- C(O) - X' - (6a),

- (CH₂)ₜ - X' - C(O) - (6b),

- C(O) - X' - (Alk) - X₂ - C(O) - (6c),

- (CH₂)ₜ - X' - D₁ - NH - (6d),

- C(O) - X' - (Alk) - X₂ - A₂ - NH - (6e),

or

- (CH₂)ₜ - X' - CH₂ - CH(OH) - CH₂ - (6f),

wherein X' and X₂ are each independently a group -O- or-NR₁'-, R₁' is hydrogen or C₁-C₄-alkyl; D₁ is a group -C(O)- or -C(S)-, (Alk) is C₂-C₁₂-alkylene, and t is 0 or 1.

L₁ in formula (5) is, for example, a group of formula 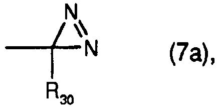 or

-N₃ (7b),

wherein R₃₀ is an electron-withdrawing substituent, for example fluorinated C₁-C₆-alkyl, such as a radical -C₂F₅ or preferably a radical -CF₃.

R₂₉ is preferably C₁-C₄-alkoxy, nitro, C₁-C₄-alkyl, hydroxy, amino or sulfo. The variable g is, for example, 1 or preferably 0.

Formulae (6a) -(6e) are to be understood, that the left bond is in each case directed to (oligomer¹), (oligomer) or B", and the right bond is directed to the aromatic ring.

(Alk) in formulae (6c) or (6e) is preferably C₂-C₆-alkylene and in particular C₂-C₃-alkylene.

X' and X₂ are each independently of the other preferably -O- or -NH-, in particular -NH-.

t is the number 1 or preferably 0.

A₁ is preferably a group of formula (6b), (6c), (6d) or (6e), in particular a group of formula (6b) or (6c), where each the above given meanings and preferences apply for the variables contained in these formulae.

A preferred embodiment relates to a radical Q of the formula (5), above, wherein A₁ is a radical of formula (6b) or (6c), g is 0 and L₁ is a radical of formula (7a). A further preferred embodiment relates to a radical Q of the formula (5), above, wherein A₁ is a radical of formula (6b) or (6c), g is 0 and L₁ is a radical of formula (7b).

B"-Q in formula (3a) is preferably a 1,2-ethylene radical of formula 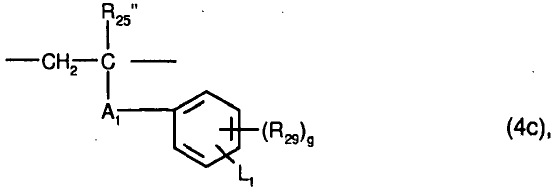 wherein R₂₅" independently has the meaning of R₂₅ given above, and for A₁, L₁, R₂₉ and g each the above given meanings and preferences apply.

A telomer radical (i) -(oligomer)-(Q)ₘ of formula 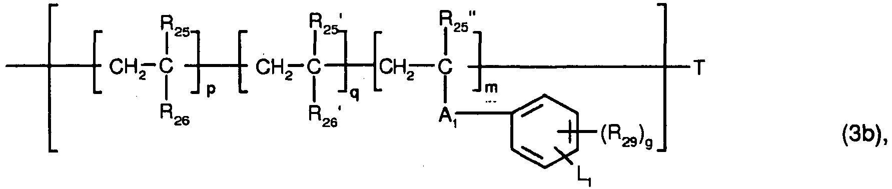 is disclosed
wherein R₂₅' and R₂₅" each independently have the meaning of R₂₅ given before, R₂₆' independently has the meaning of R₂₆ given before, and for R₂₅, R₂₆, R₂₉, A₁, L₁, T, g, p, q and m each the above given meanings and preferences apply.

A preferred telomer radical -(oligomer)-(Q)ₘ is of formula (3b) above, wherein R₂₅, R₂₅' and R₂₅" are each independently hydrogen or methyl, R₂₆ is a radical -CONH₂, -CON(CH₃)₂ or N-pyrrolidonyl, R₂₆' is -NH₂ or -C(O)X'-(Alk)-NH₂, X' is -O- or -NH-, (Alk) is C₂-C₃-alkylene, A₁ is a radical -NH-C(O)- or -C(O)-NH-(CH₂)₂₋₄-NH-C(O)-, g is 0, and L₁ is a radical 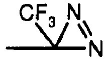 or

-N₃.

The telomer radicals of formula (3), (3a) or (3b) have an number average molecular weight Mₙ of, for example, from 200 to 20000, preferably from 250 to 12500, more preferably from 350 to 5000, and in particular from 500 to 3000.

A preferred group of polymers are those comprising units of formula (1a) above, wherein R is hydrogen or methyl; Z₁ is a radical of formula (2) above;
A is a radical of formula

- C(O) - X - (2a),

- C(O) - O - (alk") - NH - C(O) - X - (2d),

(alk") is C₂-C₄-alkylene, in particular 1,2-ethylene; X is -NH-; and (oligomer¹)-(Q)ₘ is a telomer radical of formula (3) above, wherein (alk) is C₂-C₄-alkylene, in particular 1,2-ethylene, and (oligomer)-(Q)ₘ is a radical of formula (3b) above.

(oligomer¹)-(Q)ₘ as an oligosaccharide (ii) is, for example, a di- or polysaccharide including carbohydrate containing fragments from a biopolymer, to which are attached m radicals Q as defined above . Examples are the radical of a cyclodextrin, trehalose, cellobiose, maltotriose, maltohexaose, chitohexaose or a starch, lactobionic acid, hyaluronic acid, deacetylated hyaluronic acid, chitosan, agarose, chitin 50, amylose, glucan, heparin, xylan, pectin, galactan, glycosaminoglycan, mucin, dextran, aminated dextran, cellulose, hydroxyalkylcellulose or carboxyalkylcellulose oligomer, each of which comprising m radicals Q wherein the above given meanings and preferences apply, and each of which with a number average molecular weight of, for example, up to 25000, preferably up to 10000.

A further preferred group of polymers are those comprising units of formula (1a) above, wherein R is hydrogen; Z₁ is a radical of formula (2) above;
A is a radical of formula (2h), (2i) or (2k) above and (oligomer¹)-(Q)ₘ is the radical of lactobionic acid, wherein the carboxy group is part of A and at least one hydroxy group is substituted by a radical Q.

(oligomer¹)-(Q)ₘ as an oligopeptide (iii) is, for example a radical of formula

-(CHR₂₁-C(O)-NH)ₗ-CHR₂₁-COOH (8a)

or

-CHR₂₁-(NH-C(O)-CHR₂₁)ₗ-NH₂ (8b),

wherein R₂₁ is hydrogen, C₁-C₄-alkyl or C₁-C₄-alkyl which is substituted by hydroxy, carboxy, carbamoyl, amino, phenyl, o-, m- or p-hydroxyphenyl, imidazolyl, indolyl or a radical -NH-C(=NH)-NH₂, I is an integer from 2 to 250 and m of the radicals R₂₁ or the terminating amino or carboxy group are substituted by a radical Q. Preferably the polypeptide according to (iii) is a radical of formula (8a) or 8b), wherein R₂₁ is hydrogen, methyl, hydroxymethyl, carboxymethyl, 1-hydroxyethyl, 2-carboxyethyl, isopropyl, n-, sec. or isobutyl, 4-amino-n-butyl, benzyl, p-hydroxybenzyl, imidazolylmethyl, indolylmethyl or a radical -(CH₂)₃-NH-C(=NH)-NH₂. I is an integer from 2 to 150, preferably from 5 to 100, more preferably from 5 to 75 and particularly preferably from 10 to 50, and 1 to 4 radicals R₂₁ or the terminating amino or carboxy group is substituted by a radical Q, wherein the above given meanings and preferences apply.

(oligomer¹)-(Q)ₘ as a polyoxyalkylene radical (iv) is, for example a radical of formula

-(alk^{**}-O)ₜ-[CH₂-CH₂-O]_{d}-[CH₂-CH(CH₃)-O]ₑ-R₂₂ (8c),

wherein (alk^{**}) is C₂-C₄-alkylene, t is 0 or 1, d and e are each independently an integer from 0 to 250 and the total of (d+e) is from 2 to 250, and R₂₂ is a radical of formula 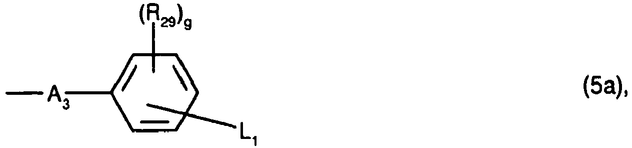 wherein L₁, R₂₉ and g are as defined above, A₃ is, for example, a radical -C(O)-, -C(O)-NH-or -C(S)-NH-, and the nitrogen of the latter two radicals is each attached to the phenyl ring.

(alk^{**}) is preferably a C₂-C₃-alkylene radical. t is preferably 0. d and e are each independently preferably an integer from 0 to 100 wherein the total of (d+e) is 5 to 100. d and e are each independently more preferably an integer from 0 to 50 wherein the total of (d+e) is 8 to 50. In a particularly preferred embodiment of the polyoxyalkylene radicals (iv) d is an integer from 8 to 50 and particularly 9 to 25, and e is 0.

In addition to the units of formula (1a) or (1b), the polyvinyl polymers (I) may contain further units which are derived from ethylenically unsaturated compounds.

Examples of further units which may be part of the polyvinyl polymers are:
(a) units -[B₁]-, wherein B₁ independently has the meaning of B mentioned above. A preferred unit -[B₁]- is of formula 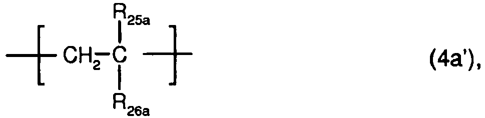 wherein R₂₅ₐ and R₂₆ₐ each independently have the meanings of R₂₅ and R₂₆ including the preferences given above. Examples of suitable -[B₁]- units are the radicals derived from acrylamide, N,N-dimethyl acrylamide, N-hydroxyethyl acrylamide, N-vinylpyrrolidone, 2-hydroxyethyl acrylate or methacrylate, N-acryloyl morpholine, methyl methacrylate, vinyl acetate, vinyl alcohol or allyl amine by replacing the double bond by a single bond;
(b) units of formula 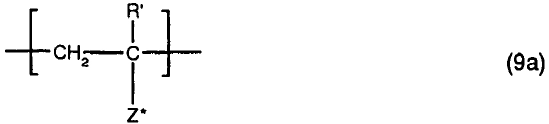 or 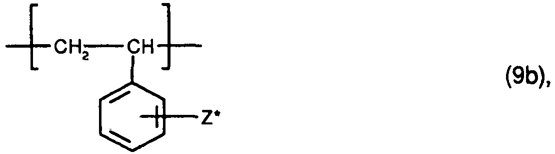 wherein R' independently has the meaning of R and Z* is is a hydrophilic side chain which is devoid of a triggerable precursor for carbene or nitrene formation and has a weight average molecular weight of ≥ 200.

Z* is, for example, the radical of a hydrophilic telomer, oligopeptide, oligosaccharide or polyalkylene oxide, preferably the radical of a hydrophilic telomer or of an oligosaccharide.

A preferred side chain Z* is a radical

- A' - (alk*) - S - (oligomer') (3c),

wherein A' independently has the meaning of A, (alk*) independently has the meaning of (alk), and (oligomer') is the radical of a hydrophilic telomer which is derived from one or more different copolymerizable vinyl monomers and which is devoid of a radical comprising a triggerable precursor for carbene or nitrene formation.

A further preferred side chain Z* is a radical

- A' - (oligomer") (3c'),

wherein A' is a radical of formula (2h), (2i) or (2k) and (oligomer") is the radical of an oligosaccharide, in particular the radical of lactobionic acid.

The telomer radical -(oligomer') corresponds, for example, to formula

-([B₂]ₚ₁-[B₂']_{q1})-T' (3d),

wherein B₂ independently has the meaning of B mentioned before, B₂' independently has the meaning of B' mentioned before, T' independently has the meaning of T mentioned before, p1 and q1 are each independently an integer from 0 to 250 and the total of (p1+q1) is an integer from 2 to 250.

A telomer radical -(oligomer') of formula 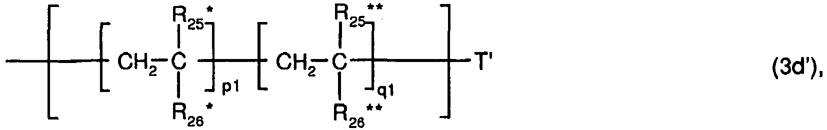 is disclosed wherein R₂₅* and R₂₅** each independently have the meaning of R₂₅ given before, R₂₆* and R₂₆** each independently have the meaning of R₂₆ given before, p1 and q1 are each independently an integer of from 0 to 150 and the total of (p1+q1) is an integer from 2 to 150, and T' independently has the meaning of T.

A preferred comb-type polymer is a polymer comprising units of formula 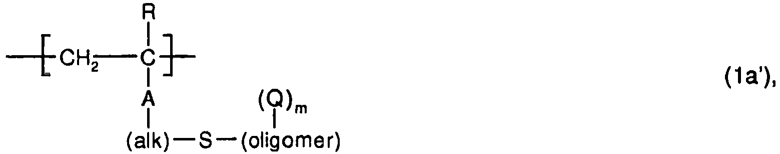 and optionally units of formula 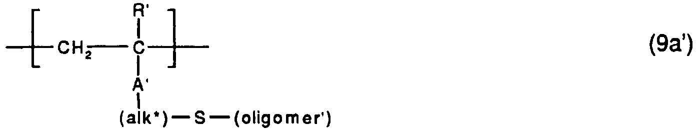 or 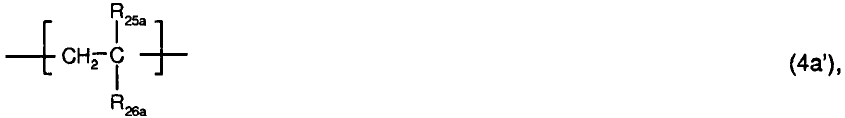 wherein A, A', R, R', R₂₅ₐ, R₂₆ₐ, (alk), (alk*), (oligomer)-(Q)ₘ and (oligomer') are as defined above.

Another preferred comb-type polymer is a polymer comprising units of formula 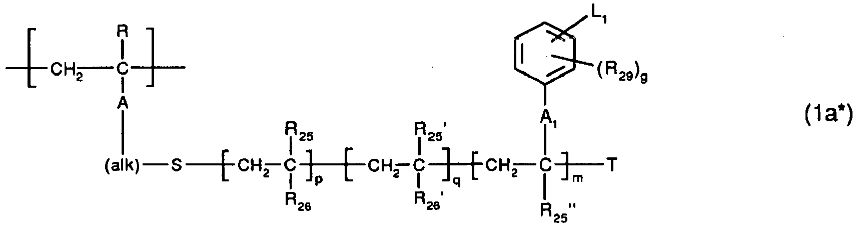 and 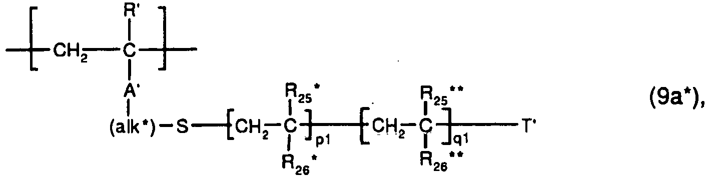 wherein the variables are each as defined above.

A particular preferred polymer consists of units of the above formula (1 a*) and optionally (9a*) above, wherein
R and R' are identical and are each hydrogen or methyl;
R₂₅ and R₂₅* are identical and are each hydrogen or methyl;
R₂₅', R₂₅",and R₂₅** are identical and are each hydrogen or methyl;
R₂₆ and R₂₆* are identical and are preferably each a radical -CONH₂, -CON(CH₃)₂ or N-pyrrolidonyl;
R₂₆' and R₂₆** are identical and are each -NH₂ or -C(O)X'-(Alk)-NH₂, wherein X' is -O-or -NH- and (Alk) is C₂-C₃-alkylene;
A₁ is a radical -NH-C(O)- or -C(O)-NH-(CH₂)₂₋₄-NH-C(O)-;
g is 0 and L₁ is a radical 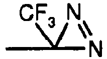 or -N₃;

A and A' are identical and are each a radical of formula

- C(O) - X - (2a),

- C(O) - O - (alk") - NH - C(O) - X - (2d),

wherein (alk") is C₂-C₄-alkylene and X is -NH-;
(alk) and (alk*) are identical and are each C₂-C₄-alkylene, in particular 1,2-ethylene;
T and T' are each independently a radical of a polymerization-reaction chain terminator
p and p1 are identical and are each an integer of from 0 to 250;
q₁ is identical to the total of (q+m) and both are an integer of from 2 to 250;
m is an integer of from 1 to 2; and q is an integer of from (q₁-1) to (q₁-2).

A further particular preferred comb-type polymer consists of units of the above formula (1a*) only, wherein the above given meanings and preferences apply for the variables contained therein.

Formulae such as formulae (1a*), (3a), (3b), (3d), (3d'), (8c) and (9a*) are to be understood as a statistic description of the respective compounds and radicals, that is to say the orientation and sequence of the units are not fixed in any way by said formulae. In addition, the values of d, e, p, p1, q, q1 and m in said formulae are statistically ones indicating the statistical composition of the monomers or segments.

Throughout the application terms such as carboxy, carboxylic acid, -COOH, sulfo, -SO₃H, amino, -NH₂ and the like always include the free acid or amine as well as a suitable salt thereof, for example a biomedically or in particular occularly acceptable salt thereof such as, for example, a sodium, potassium, ammonium salt (of an acid), or a hydrohalide such a hydrochloride (of an amine).

A comb-type polyethylene imine (II) is, for example, a polymer comprising units of formula (1c) above, wherein Z₂ is a radical of formula 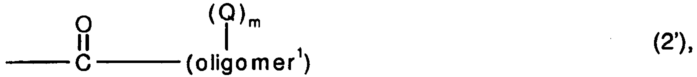 wherein for Q, m and (oligomer¹) each the above-given meanings and preferences apply.

A comb-type polypeptide (III) is, for example, a polymer comprising units of formula (1d) above, wherein Z₃ is a radical of formula 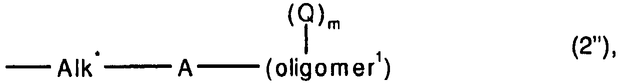 wherein Alk* is C₁-C₄-alkylene, in particular methylene or 1,4-butylene, A is, for example, a radical -C(O)X- or -XC(O)- and for X, Q, m and (oligomer¹) each the above-given meanings and preferences apply.
A comb-type polyether (IV) is, for example, a polyglycidol, wherein the hydroxy groups are substituted in part by a radical of formula 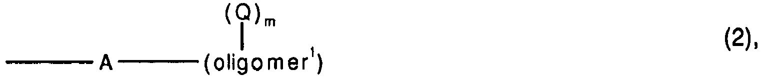 wherein A is, for example, -OC(O)-, and for Q, m and (oligomer¹) each the above-given meanings and preferences apply.

A comb-type polysaccharide (V) is, for example, a chitosan, hyaluronic acid, aminodextrane or carboxymethyl cellulose, wherein the hydroxy, amino or carboxy groups are substituted in part by a radical of the formula (2) given above, wherein A is, for example, -XC(O)- or - C(O)X-, and for X, Q, m and (oligomer¹) each the above-given meanings and preferences apply.

The comb-type polymers have a number average molecular weight Mₙ of, for example, from 10 to 200000 kDa and preferably from 150 to 1500 kDa.

The polyvinyl polymers (i) may be prepared, for example by polymerising a macromonomer of formula 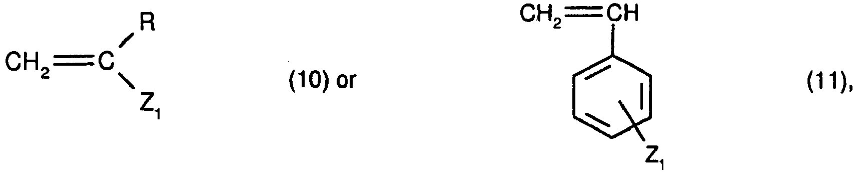 wherein R and Z₁ are as defined, optionally in the presence of further comonomers, in a manner known *per se.*

The polymerization of the macromonomer(s) is carried out, for example in solution and may be initiated , for example, thermally by the action of heat or by irradiation, in particular thermally. Suitable solvents are, for example, water, C₁-C₄-alcanols such as methanol or ethanol, glycols such as ethylene glycol or dipolar aprotic solvents such as, for example, acetonitrile, N,N-dimethyl formamide (DMF), N-methyl pyrrolidone (NMP), dimethyl sulfoxide (DMSO), N,N-dimethyl acetamide or acetone.

In case of a thermally initiated polymerization of the macromonomer(s) said polymerization may be carried out, for example, at elevated temperature, for example at a temperature of from 35 to 100 °C and preferably 40 to 80 °C, for a time period of, for example, from 10 minutes to 48 hours and preferably 30 minutes to 36 hours in the presence of a solvent and a thermal initiator. Suitable thermal polymerization initiators are known to the skilled artisan and comprise for example peroxides, hydroperoxides, azo-bis(alkyl- or cycloalkylnitriles), persulfates, percarbonates or mixtures thereof. Examples are benzoylperoxide, tert.-butyl peroxide, di-tert.-butyl-diperoxyphthalate, tert.-butyl hydroperoxide, azo-bis(isobutyronitrile), 1,1'-azo-bis (1-cyclohexanecarbonitrile), 2,2'-azo-bis(2,4-dimethylvaleronitrile), 4,4'-azo-bis(4-cyanovaleric acid, 4,4'-azo-bis(4-cyano-n-pentanol) and the like.

The polymerisation of the macromonomers of formula (10a) or (10b) may also be carried out according to PCT application WO 92/09639 by polymerizing them, optionally in the presence of one or more comonomers, in the presence of a chain transfer agent such as cysteamine hydrochloride, thioglycolic acid.

The compounds of formula (10), for example those of formula 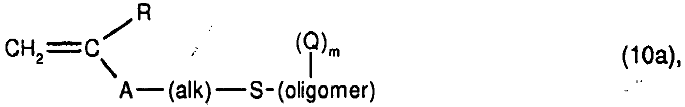 wherein the variables are as defined above, may be obtained, for example, in analogy to the method disclosed in WO 99/57581, by reacting a compound of formula 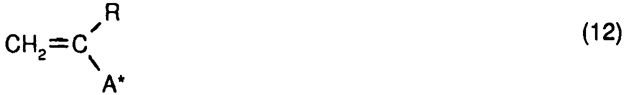 wherein R has the above-given meaning and A* is, for example, a group -C(O)-A°, wherein A° is, for example, hydroxy, halogen, particularly chlorine, the radical of an ester group; or an oxyalkylene radical comprising an epoxy group, for example the radical 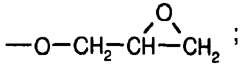 or a radical -O-C₂-C₁₂-alkylene-N=C=O; or a radical 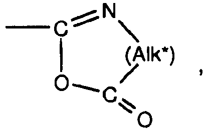 with a compound of formula

A₄-(alk)-S-(oligomer)-[Q]ₘ (13),

wherein (alk), (Alk*), and (oligomer)-[Q]ₘ are as defined above, and A₄ is a group co-reactive to A*, for example hydroxy, amino, carboxy or a derivative thereof, in particular amino.

A carboxy derivative, a derivative of carboxy and the like are to be understood as meaning, for example, a lactone, a carboxylic acid anhydride, halide, amide or ester, for example -C(O)Cl, -C(O)NH₂, -C(O)C₁-C₆-alkyl, -C(O)-phenyl or in particular an activated ester such as carboxy having been reacted with an activating agent, for example with N-hydroxy succinimide (NHS) or sulfo-N-hydroxy succinimide. A particularly preferred carboxy derivative is an activated ester of formula 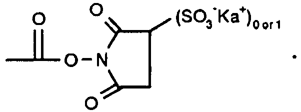 wherein Ka⁺ is a cation, for example, Na⁺ or K⁺.
For example, the reactions of a compound of formula (12) having a carboxy, carboxylic acid halide, ester, in particular activated ester, acid anhydride, isocyanato or isothiocyanato group with amino or hydroxy groups A₄ of the compound of formula (13), or vice versa, are well-known in the art and may be carried out as described in textbooks of organic chemistry.

For example, the reaction of an isocyanato or isothiocyanato derivative of formula (12) with amino- or hydroxy groups A₄ of the compound of formula (13) may be carried out in an inert organic solvent such as an optionally halogenated hydrocarbon, for example petroleum ether, methylcyclohexane, toluene, chloroform, methylene chloride and the like, or an ether, for example diethyl ether, tetrahydrofurane, dioxane, or a more polar solvent such as DMSO, DMA, N-methylpyrrolidone or even a lower alcohol, at a temperature of from 0 to 100°C, preferably from 0 to 50°C and particularly preferably at room temperature, optionally in the presence of a catalyst, for example a tertiary amine such as triethylamine or tri-n-butylamine, 1,4-diazabicyclooctane, or a tin compound such as dibutyltin dilaurate or tin dioctanoate. It is advantageous to carry out the above reactions under an inert atmosphere, for example under an nitrogen or argon atmosphere.

In case of a compound of formula (12) carrying a carboxy anhydride group, the reaction of the carboxy anhydride with amino or hydroxy groups A₄ of the compound of formula (13) may be carried out as described in organic textbooks, for example in an aprotic solvent, for example one of the above-mentioned aprotic solvents, at a temperature from room temperature to about 100 °C.

In case of a compound of formula (12) carrying a carboxy group, the reaction of said carboxy group with amino or hydroxy groups A₄ of the compound of formula (13) (or vice versa) may be carried out under the conditions that are customary for ester or amide formation, for example in an aprotic medium at a temperature from about room temperature to about 100°C. It is further preferred to carry out the esterification or amidation reaction in the presence of an activating agent, for example N-ethyl-N'-(3-dimethylaminopropyl)carbodiimide (EDC), N-hydroxy succinimide (NHS), sulfo-N-hydroxy succinimide or N,N'-dicyclohexyl carbodiimide (DCC) or in the presence of an o-(benztriazole)- uronium salt such as o-(benztriazol-1-y-)-N,N,N,N-tetramethyluronium hexafluorophosphate. Most preferably, the carboxylic acid derivative of formula (12) is previously converted to an activated ester using one of the above-mentioned activating agents, and the activated ester is then further reacted with the hydroxy or preferably amino groups of the compound of formula (13).

In case that the compound of formula (12) carries an glycidyl group , the reaction of said glycidyl group with amino groups A₄ of the compound of formula (13) may be carried out, for example, at room temperature or at elevated temperature, for example at about 20 to 100 °C, in water, in a suitable organic solvent or in mixtures thereof. The reaction of the glycidyl group with hydroxy groups A₄ of the compound of formula (13) may be carried out, for example, at room temperature or at elevated temperature, for example at about 20 to 100 °C, in an aprotic medium using a base catalyst, for example Al(O-C₁-C₆-alkyl)₃ or Ti(O-C₁-C₆-alkyl)₃.

The compounds of formula (12) are known and commercially available in part.

The compounds of formula (13) may be prepared according to known methods, for example as described in WO 92/09639 or WO 99/57581, by copolymerising one or more hydrophilic ethylenically unsaturated monomers, at least one of them carrying a group -[Q], in the presence of a functional chain transfer agent such as cysteamine hydrochloride, thioglycolic acid.

A suitable monomer carrying a group [Q] is, for example, a monomer of formula 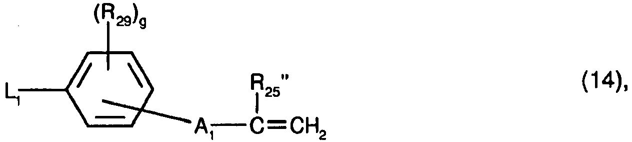 wherein A₁, L₁, R₂₅", R₂₉ and g are each as defined above.

The compounds of formula (14) may be obtained, for example, by reacting a compound of formula

H₂C = C(R₂₅")A** (15)

with a compound of formula 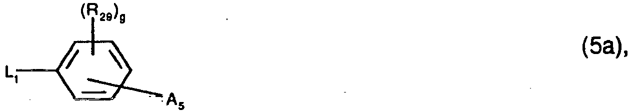 wherein A** independently has the meaning of A* given before, A₅ independently has the meaning of A₄ given before and is preferably a radical hydroxy, amino, carboxy or an above given derivative thereof, -NCO, -NCS or glycidyl, and R₂₅", R₂₉, L₁ and g each have the above given meaning. The reaction between the compounds of formula (5a) and (15) may be carried out as described above.

The compounds of formula (5a) are known or may be prepared according to known methods, some of them are also commercially available.

The telomer compounds of formula (13) are preferably obtained by copolymerising a compound of formula (14) above, wherein the above given meanings and preferences apply for the variables contained therein, with a hydrophilic monomer, for example a monomer of formula CH₂=CR₂₅ₐR₂₆ₐ, wherein R₂₅ₐ and R₂₆ₐ are as defined above, in particular acrylamide, N,N-dimethyl acrylamide or N-vinyl pyrrolidone, in the presence of a functional chain transfer agent such as cysteamine hydrochloride, thioglycolic acid.

The compounds of formula (10), wherein Z₁ comprises an oligosaccharide, oligopeptide or polyalkylene oxide radical -(oligomer¹)-(Q)ₘ, may be prepared, for example, by reacting a commercially available oligosaccharide, oligopeptide or polyalkylene oxide with a compound each of the above given formulae (12) and (5a) according to methods described above.

A further synthetic route to a group of comb-type polymers comprises first preparing a polymer comprising units of formula 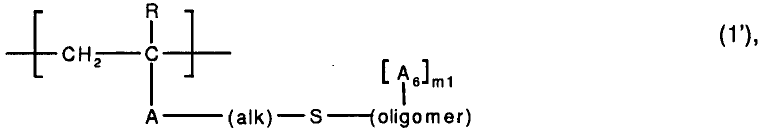 wherein A, R, (alk) and (oligomer) are as defined, A₆ is, for example, carboxy or a derivative thereof, or is a radical -(CH₂)ₜ-X'H, or is a radical -C(O)X'-(Alk)-X₂H, wherein X', X₂, (Alk) and t are as defined above, and m1 is an integer of, for example, from 1 to 250, preferably from 1 to 100 and especially from 1 to 50, and reacting said polymer with about m equivalents of a compound of formula 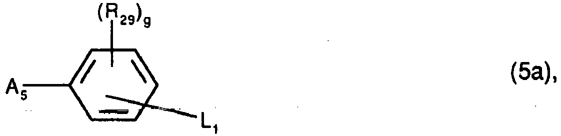 wherein R₂₉, L₁ and g are as defined above, and A₅ is a group co-reactive to A₆, for example a radical -X'H, carboxy or a derivative thereof, -NCO, -NCS or glycidyl, wherein X' is as defined above.

The reactions between A₆ groups of the polymer of formula (1') and A₅ groups of the compound of formula (5a) may be carried out as described above.

The polymers of formula (1') may be obtained, for example, by (co)polymerising the underlying macromonomer, optionally in the presence of further comonomers or comacromers, according to one of the methods mentioned above for the polymerisation of the compounds of formula (10a). Said macromonomers may be obtained according to the method described in WO 99/57581.

A particularly preferred embodiment relates to a polymer comprising units of formula 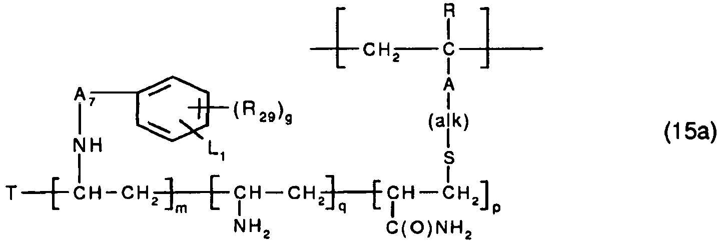 and optionally 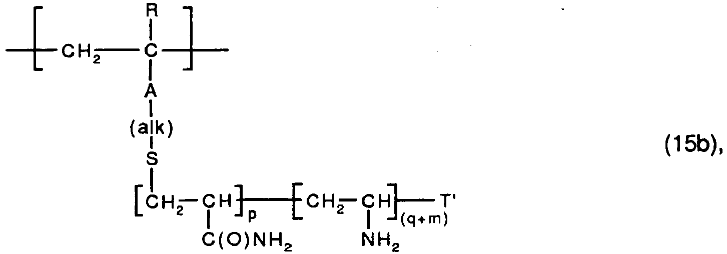 wherein A, L₁, R, R₂₉, T, T', (alk), g, p, q and m are each defined as mentioned above, and A₇ is -C(O)-, -NHC(O)-, -NHC(S)- or -CH₂-CH(OH)-CH₂-, in particular -C(O)-, which is obtainable by preparing first a macromonomer of formula 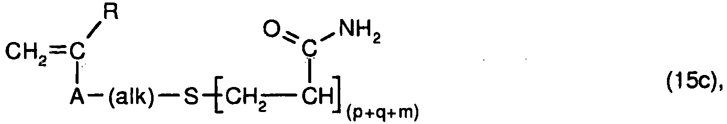 polymerizing the macromonomer in a manner known per se to yield a homopolymer comprising or preferably consisting of units of formula 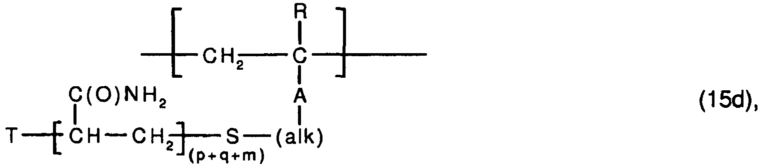 reducing the carbonamido group of (q+m) carbonamidoethylene units to amino groups, for example, by subjecting the homopolymer comprising units of formula (15c) to a Hofmann degradation reaction, to yield a polymer comprising units of formula 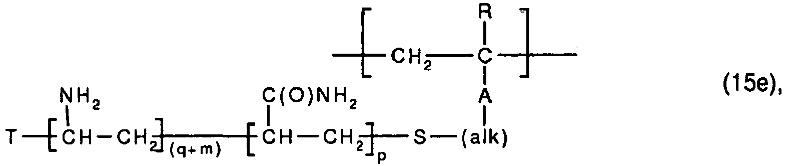 and reacting said polymer with a compound of formula (5a) given before in an amount sufficient to provide some or all of the polymer side chains with (m) triggerable precursors for carbene or nitrene formation, wherein A₇ is carboxy or a derivative thereof, or is - NCO, -NCS or glycidyl. In the above formulae (15a) - (15e), the variables have the meanings and preferences as indicated before.

The macromonomers of formula (15c) are known or may be prepared according to known methods, for example as described in WO 92/09639 or WO 99/57581. The polymerisation of the macromonomer of formula (15c) may be carried out using standard procedures as described above. The degradation of a certain amount of carbonamido groups to amino groups within the polymer of formula (15d) may be carried out as described in textbooks of Organic Chemistry, for example by the action of a hypochloride such as NaOCI in an aqueous alkaline medium. For example, about 0.5 to 40 %, preferably 1 to 20 %, of the carbonamido groups are converted to amino groups. The reaction of the resulting polymer of formula (15e) with the compound of formula (5a) may be carried out as described above.

The comb-type polymers comprising units of the above given formula (1a) or (1b) furthermore may be obtained by reacting a polyvinyl- or polystyryl polymer comprising reactive groups, for example, amino, methylamino, hydroxy or carboxy groups or a suitable derivative thereof, with an oligomer, for example an oligosaccharide, oligopeptide or polyalkylene oxide, having a functional group that is co-reactive to the reactive group of the polyvinyl or polystyryl polymer, e.g. a carboxy, amino or hydroxy group or a derivative thereof. Functional groups within the side chains of the resulting comb polymers, for example amino or hydroxy groups, then may be reacted with a compound of the above given formula (5a) to yield a reactive comb polymer.

Likewise, the comb-type polymers comprising units of formula (1c) or (1d) may be obtained, for example, by reacting a commercially available polyethylene imine, polypeptide or polysaccharide with with an oligomer, for example a telomer, oligosaccharide, oligopeptide or polyalkylene oxide, having a co-reactive functional group and then reacting functional groups within the side chains of the resulting comb polymer, for example amino or hydroxy groups, with a compound of the above given formula (5a).

Examples of materials to be coated according to the invention are inorganic or organic bulk materials, for example quartz, ceramics, glasses, silicate minerals, silica gels, metals, metal oxides, carbon materials such as graphite or glassy carbon, natural or synthetic organic polymers, or laminates, composites or blends of said materials, in particular natural or synthetic organic polymers which are known in large number. Some examples of polymers are polyaddition and polycondensation polymers (polyurethanes, epoxy resins, polyethers, polyesters, polyamides and polyimides); vinyl polymers (polyacrylates, polymethacrylates, polystyrene, polyethylene and halogenated derivatives thereof, polyvinyl acetate and polyacrylonitrile); or elastomers (silicones, polybutadiene and polyisoprene).

A preferred group of materials to be coated are those being conventionally used for the manufacture of biomedical devices, e.g. contact lenses, in particular contact lenses, which are not hydrophilic per se. Such materials are known to the skilled artisan and may comprise for example polysiloxanes, perfluoropolyethers, fluorinated poly(meth)acrylates or equivalent fluorinated polymers derived e.g. from other polymerizable carboxylic acids, polyalkyl (meth)acrylates or equivalent alkylester polymers derived from other polymerizable carboxylic acids, polyolefines, or fluorinated polyolefines, such as polyvinylidene fluoride, fluorinated ethylene propylene, or tetrafluoroethylene, preferably in combination with specific dioxols, such as perfluoro-2,2-dimethyl-1,3-dioxol. Examples of suitable bulk materials are e.g. Lotrafilcon A, Neofocon, Pasifocon, Telefocon, Silafocon, Fluorsilfocon, Paflufocon, Silafocon, Elastofilcon, Fluorofocon or Teflon AF materials, such as Teflon AF 1600 or Teflon AF 2400 which are copolymers of about 63 to 73 mol % of perfluoro-2,2-dimethyl-1,3-dioxol and about 37 to 27 mol % of tetrafluoroethylene, or of about 80 to 90 mol % of perfluoro-2,2-dimethyl-1,3-dioxol and about 20 to 10 mol % of tetrafluoroethylene.

Another group of preferred materials to be coated are amphiphilic segmented copolymers comprising at least one hydrophobic segment and at least one hydrophilic segment which are linked through a bond or a bridge member. Examples are silicone hydrogels, for example those disclosed in PCT applications WO 96/31792 and WO 97/49740.

The material to be coated may also be any blood-contacting material conventionally used for the manufacture of renal dialysis membranes, blood storage bags, pacemaker leads or vascular grafts. For example, the material to be modified on its surface may be a polyurethane, polydimethylsiloxane, polytetrafluoroethylene, polyvinylchloride, Dacron^{™} or a composite made therefrom.

Moreover, the material to be coated may also be an inorganic or metallic base material with or without suitable reactive groups, e.g. ceramic, quartz, or metals, such as silicon or gold, or other polymeric or non-polymeric substrates. E.g. for implantable biomedical applications, ceramics or carbohydrate containing materials such as polysaccharides are very useful. In addition, e.g. for biosensor purposes, dextran coated base materials are expected to reduce nonspecific binding effects if the structure of the coating is well controlled. Biosensors may require polysaccharides on gold, quartz, or other non-polymeric substrates.

The form of the material to be coated may vary within wide limits. Examples are particles, granules, capsules, fibres, and particularly moldings of all kinds, for example tubes, films, membranes or biomedical moldings, in particular ophthalmic moldings, such as contact lenses, intraoccular lenses or artificial cornea. Further examples of moldings are materials useful for example as wound healing dressings, eye bandages, materials for the sustained release of an active compound such as a drug delivery patch, moldings that can be used in surgery, such as heart valves, vascular grafts, catheters, artificial organs, encapsulated biologic implants, e.g. pancreatic islets, materials for prostheses such as bone substitutes, or moldings for diagnostics, membranes or biomedical instruments or apparatus.

The polymers may be applied to the bulk material surface according to processes known per se. For example, the bulk material is immersed in a solution of the polymer(s), or a layer of the polymer(s) is first of all deposited on the modified bulk material surface, for example, by dipping, spraying, printing, transfer grafting, for example, from molds, spreading, pouring, rolling, spin coating or vacuum vapor deposition, dipping or especially spraying being preferred. Most preferably, a solution comprising one or more different polymers is sprayed onto the bulk material surface which may be wet or preferably dry. According to a further preferred embodiment, the material to be coated is dipped in a solution of the polymer(s) in a solvent that is able to swell the material (swell-dipping).

Suitable solvents useful as solvents of the polymers are, for example, water, C₁-C₄-alkanols such as methanol, ethanol or iso-propanol, nitriles such as acetonitrile, tetrahydrofurane (THF), aqueous solutions comprising an alkanol, THF, and also hydrocarbons, for example halogenated hydrocarbons such as methylene chloride or chloroform. The concentration of the polymer(s) in the spray solution depends on the specific compound used but is in general in the range of from 0.1 to 100 g/l, preferably 0.5 to 50 g/l, more preferably 0.5 to 25 g/l and in particular 1 to 10 g/l.

The fixation of the polymers on the bulk material surface then may be initiated, for example, by heat or preferably by irradiation, particularly by irradiation with UV or visible light. Suitable light sources for the irradiation are known to the artisan and comprise for example mercury lamps, high pressure mercury lamps, xenon lamps, carbon arc lamps or sunlight. Sensitizers may be used to shift the irradiation wavelength. In addition, a suitable filter may be used to limit the irradiation to a specific wavelength range. Preferably, the bulk material surface to which have been previously applied the polymer(s) is irradiated with light of a wavelength ≥300nm. The time period of irradiation is not critical but is usually in the range of up to 30 minutes, preferably from 10 secondes to 10 minutes, and more preferably from 15 seconds to 5 minutes, and particularly preferably from 20 seconds to 1 minute. It is advantageous to carry out the irradiation in an atmosphere of inert gas. After the polymerization, any non-covalently bonded polymers can be removed, for example by treatment, e.g. extraction, with suitable solvents, for example water, C₁-C₄-alkanols, water/C₁-C₄-alkanol mixtures or acetonitrile.

The above outlined process cycle, (i) contacting, i.e. spraying or dipping, the surface with the polymer(s) and (ii) fixing the polymer(s) on the surface, i.e. by irradiation, may be carried out once or several times. For example, 1 to 100, preferably 1 to 50 and in particular 1 to 25, different layers of one or more different polymers are added and fixed on the bulk material surface. According to a further embodiment of the invention, the step (i) of contacting, i.e. spraying or dipping, the surface with the polymer(s) is carried out several times, for example from 2 to 25 times and preferably from 2 to 10 times, and the fixation step (ii) is done only afterwards. If a process comprising several spraying or dipping steps is used, each spraying or dipping step may be carried out with the same polymer; alternatively different polymers may be used in each spraying or dipping step. For example, two or more different non-charged polymers may be used to provide a multilamellar coating; or alternating layers of a polyanionic and a polycationic polymer may be used to provide a polyelectrolyte coating.

The thickness of the polymer coating on the bulk material depends principally on the desired properties. It can be, for example, from 0.001 to 1000 µm, preferably from 0.005 to 100 µm, more preferably from 0.01 to 50 µm, even more preferably from 0.01 to 5 µm, especially preferably from 0.01 to 1 µm and particularly preferably from 0.01 to 0.5 µm.

The coated materials according to the invention and especially biomedical moldings comprising such a coating have a variety of unexpected advantages over those of the prior art which make those moldings very suitable for practical purposes, e.g. as contact lens for extended wear or intraocular lens. For example, they do have a high surface wettability which can be demonstrated by their contact angles, their water retention and their water-film break up time or on-eye pre-lens tear film break up time (TBUT).

The TBUT plays an particularly important role in the field of ophthalmic devices such as contact lenses. Thus the facile movement of an eyelid over a contact lens has proven important for the comfort of the wearer; this sliding motion is facilitated by the presence of a continuous layer of tear fluid on the contact lens, a layer which lubricates the tissue/lens interface. However, clinical tests have shown that currently available contact lenses partially dry out between blinks, thus increasing friction between eyelid and the lens. The increased friction results in soreness of the eyes and reduced movement of the contact lenses. Now it has become feasible to considerably increase the TBUT of commercial contact lenses such as, for example, nelfilcon A, vifilcon A or lotrafilcon A lenses, by applying a surface coating according to the invention. On the base curve of a contact lens, the pronounced lubricity of the coating facilitates the on-eye lens movement which is essential for extended wear of contact lenses. Moreover, the composite materials of the invention provide additional effects being essential for lenses for extended wear, such as an increased thickness of the pre-lens tear film which contributes substantially to low microbial adhesion and resistance to deposit formation. Due to the extremely soft and lubricious character of the novel surface coatings, biomedical articles such as in particular contact lenses show a superior wearing comfort including improvements with respect to late day dryness and long term (overnight) wear. The novel surface coatings moreover interact in a reversible manner with ocular mucus which contributes to the improved wearing comfort.

In addition, biomedical devices, e.g. ophthalmic devices such as contact lenses, coated by the process of the invention, have a very pronounced biocompatibility combined with good mechanical properties. For example, the devices are blood compatible and have good tissue integration. In addition, there are generally no adverse eye effects observed, while the adsorption of proteins or lipids is low, also the salt deposit formation is lower than with conventional contact lenses. Generally, there is low fouling, low microbial adhesion and low bioerosion while good mechanical properties can be for example found in a low friction coefficient and low abrasion properties. Moreover, the dimensional stability as well as the long term stability of the materials obtainable according to the invention is excellent. In addition, the attachment of a hydrophilic surface coating at a given bulk material according to the invention does not affect its visual transparency.

In summary, the ophthalmic devices obtainable by the process of the present invention, such as contact lenses, artificial cornea or intraocular lenses, provide a combination of low spoilation with respect to cell debris, cosmetics, dust or dirt, solvent vapors or chemicals, with a high comfort for the patient wearing such opthalmic devices in view of the soft hydrogel surface which for example provides a very good on-eye movement of the ohthalmic device.

Biomedical devices such as renal dialysis membranes, blood storage bags, pacemaker leads or vascular grafts cated by the process of the present invention resist fouling by proteins by virtue of the continuous layer of bound water, thus reducing the rate and extent of thrombosis. Blood-contacting devices fabricated according to the present invention are therefore haemocompatible and biocompatible.

In the examples, if not indicated otherwise, amounts are amounts by weight, temperatures are given in degrees Celsius. In general reactions involving a diazirine or azide compound are carried out in flasks made of brown glassware. Tear break-up time values in general relate to the pre-lens tear film non-invasive break-up time (PLTF-NIBUT) that is determined following the procedure published by M. Guillon et al., Ophthal. Physiol. Opt. 9, 355-359 (1989) or M. Guillon et al., Optometry and Vision Science 74, 273-279 (1997). Average advancing and receding water contact angles of coated and non-coated lenses are determined with the dynamic Wilhelmy method using a Krüss K-12 instrument (Krüss GmbH, Hamburg, Germany). Wetting force on the solid is measured as the solid is immersed in or withdrawn from a liquid of known surface tension.

### Example A-1: Acrylamide telomer (Mₙ 2650 Da) synthesis

A 1000 ml round bottom flask is charged with a solution of 71.1g (1 mol) acrylamide, 4.93g (18.2 mmol) α,α'-azodiisobutyramidine dihydrochloride and 4.93 g (36.4 mmol) cysteamin-hydrochloride in 400 ml of water. The clear and slightly yellowish solution is acidified with a few drops of hydrochloric acid to pH 3. The stirred acidic solution is evacuated to 50 mbar and filled with argon. This is repeated three times. With a constant stream of argon, this solution is poured into a 500 ml dropping funnel which is put onto an 'flow-through-reactor' consisting of an 1000ml three-necked round-bottom flask, reflux condenser, thermometer, magnetic stirrer and a 30 cm Liebig-condenser, which is filled with glass wool. The whole apparatus is constantly purged with argon. The dropping funnel is put onto the Liebig condenser, which is heated to 65 °C. The flask is heated to 60°C. The solution is slowly dropped through the Liebig-condenser into the stirred flask. This takes 2.5 hrs. During this time the temperature in the flask is kept between 58-65°C. After the completed addition, the solution is stirred for 2hrs at 60 °C.
NaOH is added to the clear and slightly yellowish solution until pH 10 is reached. The product is purified through reverse osmosis, using Millipore cartridge with a cut-off at 1000 Da and freeze-dried. A bright-white solid product is obtained (Mₙ ≈ 2650 Da).

### Example A-2 : N,N-dimethyl-acrylamide (DMA) telomer synthesis

Following the procedure described in example A-1 a mono amine-hydrochloride terminated telomer of N,N-dimetyl-acrylamide (DMA) of the molecular weight Mₙ ∼ 2000 is prepared.

### Example B-1: Preparation of IEM-functionalized acrylamide telomer solution

7.5 g of acrylamide telomer of Example A-1 are dissolved in 80 ml of HPLC water. Argon is then let to bubble through the solution for the period of about 30 minutes. This mixture is then added to the equimolar amount (0.81 g) of isocyanatoethyl methacrylate (IEM, isocyanate titration = 6.45 mEq/g) under stirring. The whole mixture is then stirred under argon flow for 12 hours. After adding of 0.8 g of NaCI to the solution and 10 minutes stirring, the mixture is filtered through 0.45 µm Teflon filter, degassed by repeated (3x) evacuation and bubbling with argon in order to remove oxygen.

### Example B-2: Preparation of IEM-functionalized DMA telomer solution

The DMA telomer obtained in example A-2 is dissolved in water (HPLC grade) and adjusted to pH 10 by adding aqueous sodium hydroxide solution. Following the procedure outlined in example B-1 the primary terminal amino group thus generated is then reacted with 2-isocyanatoethyl-methacrylate. After ultrafiltration and lyophilization of the resulting clear aqueous solution the macromonomer is obtained as a white powder.

### Example C: Polyacrylamide comb polymer synthesis

35 g of IEM-functionalized acrylamide telomer obtained according to Example B-1 (Mₙ = 2650 Da) are given into a two-necked round-bottom flask and 314 g of water are added. To the clear solution 350 mg of NaCI and 1 g of aqueous initiator solution (10.47 mg V50/ml) are added. The mixture is degassed by repeated (3x) evacuation and bubbling with argon in order to remove oxygen. The stirred mixture is heated to 80 °C for 3,5 hours before cooling down to room temperature. Dropping the solution into methanol isolates the product. The white powder is filtered off and 600 ml water are added. The viscous solution is freeze dried. The product is analyzed by size exclusion chromatography combined with laser light scattering. The weight average molecular weight M_{w} is 7830 kDa, the number average molecular weight Mₙ is 3040 kDa and the polydispersity is 2.6. The radius of gyration is 103 nm.

### Example D-1-D-3: Hofmann degradation of Polyacrylamide comb polymer

2.47 g of comb polymer of Example C are given into a flask and 43 g water is added. The clear solution is cooled to 0°C. Amounts of NaOCI and NaOH as given in the Table are added with stirring. The reaction time is about 1 hour. Afterwards the solution is adjusted with HCI to pH 2 and the product is isolated by precipitation in 300 ml methanol. The white powder is filtered off and solved again in 100 ml water and filtered through G3. The solution is ultra filtrated (cut-off membrane 10 kDa) and freeze dried. The product is analyzed by size exclusion chromatography combined with laser light scattering, 1H-NMR and amino titration (see table).

| Example | Synthesis via Hofmann degradation | | | Titration and degree of amination | |
|---|---|---|---|---|---|
| | Amide [mmol] | NaOCl [mmol] | NaOH [mmol] | NH₂ -group [mE/g] | % |
| D-1 | 31.1 | 1.7 | 35.0 | 0.24 | 1.9 |
| D-2 | 31.1 | 5.0 | 25.2 | 0.97 | 7.8 |
| D-3 | 31.1 | 10.1 | 50.0 | 1.64 | 13.1 |

### Example E: Synthesis of a diazirine NHS ester

7.06 g (36.81 mmol) N-ethyl-N'-(3-dimethylaminopropyl)carbodiimide hydrochloride are given into a 500 ml round bottom flask filled with 200 ml water at pH 12. After 15 minutes stirring at room temperature 50 ml dichlormethane are added. The extraction is repeated three times with 50 ml dichlormethane. The organic phases are combined, dried over MgSO₄, filtered and dried at high vacuum. The free base is given into a 250 ml round bottom flask and dissolved in 150 ml acetonitrile (28.4 ppm water). 17.19 g (∼12 mmol Cl) Merrifield polymer is added. The suspension is heated to 100°C under reflux for 16 hours. After cooling to room temperature the activated Merrifield polymer is washed 3 times with 50 ml acetonitrile, 2 times with 50 ml diethylether and dried at high vacuum.
300 mg (1.30 mmol) 4-(1-azi-2,2,2-trifluoroethyl)benzoic acid, 135 mg (1.17 mmol) N-hydroxysuccinimide, 6.3 g activated Merrifield polymer and 45 ml chloroform are given into a 100 ml brown round bottom flask and shaked at room temperature. DC control indicates complete conversion after 30 minutes. The mixture is filtered and washed with chloroform. The filtrate is dried at high vacuum. Complete reaction is determined by 1 H-NMR spectroscopy.

### Example F-1: Synthesis of a reactive comb polymer

0.5 g (0.49 mE/g amino hydrochloride) of comb polymer of Example D-2 are dissolved in 25 ml water and cooled to 0°C. The solution is adjusted to pH 10 and 160 mg (0.49 mmol) of the diazirine compound of Example E are added for 1 hour under stirring. Afterwards the solution is ultra filtrated using a 10 kDa cut-off membrane and then freeze dried.

### Example F-2: Synthesis of a reactive comb Polymer

0.5 g (0.49 mE/g amino hydrochloride) of comb polymer of Example D-2 are dissolved in 25 ml water and cooled to 0°C. The solution is adjusted to pH 10 and 87 mg (0.49 mmol) of 4-azidophenyl isothiocyanate are added for 1 hour under stirring. Afterwards the solution is ultra filtrated using a 10 kDa cut-off membrane and then freeze dried.

### Example G-1: Spray coating of contact lenses

An aqueous solution of 2 mg/ml reactive comb polymer of Example F-2 is given into a funnel of an airbrush aero-pro 381™ (Hansa). The solution is sprayed on both sides of lotrafilcon A contact lenses (polysiloxane/perfluoroalkylpolyether copolymer) for 5 seconds using a nitrogen pressure of 1.2 bar. Afterwards the lenses are irradiated 30 seconds using UV LQ 400B lamp (Gröbel) with an intensity of 1.29 mW/cm² and a 305 nm cutoff filter. The lenses are extracted in water overnight and then autoclaved. The wettability is monitored by dynamic contact angle measurements leading to advancing and receding contact angle of 20° and 0°.

### Example G-2: Spray coating of contact lenses

An aqueous solution of 1 mg/ml reactive comb polymer of Example F-1 is given into a funnel of an airbrush aero-pro 381™ (Hansa). The solution is sprayed on both sides of lotrafilcon A contact lenses for 5 seconds using a nitrogen pressure of 1.2 bar. Afterwards the lenses are irradiated 60 seconds using an EFOS blue light lamp. The lenses are extracted in water overnight and then autoclaved. The wettability is monitored by dynamic contact angle measurements leading to advancing and receding contact angle of 15° and 0°.

### Example G-3: Dip coating of contact lenses

Lotrafilcon A lenses are dipped into an aqueous solution of 0.1 mg/ml reactive comb polymer of Example F-1 for 5 minutes under stirring. Afterwards the lenses are irradiated 60 seconds using an EFOS blue light lamp. The lenses are extracted in water overnight and then autoclaved. The wettability is monitored by dynamic contact angle measurements leading to advancing and receding contact angle of 0° and 0°.

### Example G-4: Dip coating of contact lenses

Lotrafilcon A lenses are dipped into an aqueous solution of 0.1 mg/ml reactive comb polymer of Example F-2 for 5 minutes under stirring. Afterwards the lenses are irradiated 30 seconds using UV LQ 400B lamp (Gröbel) with an intensity of 1.29 mW/cm² and a 305 nm cutoff filter. The lenses are extracted in water overnight and then autoclaved. The wettability is monitored by dynamic contact angle measurements leading to advancing and receding contact angle of 10° and 0°.

### Example H: Preparation of a comb polymer

5.7g (100 mVal NH₂) of poly-allylamine (M_{w}∼70 000) are dissolved in 100 ml of dist, water and 64.8 g (200 mMoles) of lactobionolactone are added. The mixture is stirred at room temperature for 48 hrs and heated to 40 °C for 8 hrs. After removal of unreacted or hydrolysed lactone from the solution through ultrafiltration (cut-off membrane 1000 Da) the titration of residual amino groups shows a conversion of 53 %. The remaining primary amino groups on the polymer are quenched by addition of 22.2 g (300 mMoles) of glycidol. To achieve complete conversion the reaction mixture is stirred at room temperature for 12 hrs. and then at 40 °C for another 8 hrs. After excessive glycidol has been removed from the solution by ultrafiltration as before the product is free of amine. A white powdery product is obtained after lyophilization and vacuum drying at 0, 001 Torr. GPC analysis in water shows a molecular weight of the polymer of Mw ∼ 390 kDalton.

### Example J: Preparation of a photoreactive comb polymer

3.6 g of the polymer of Example H are suspended in 100 ml of dry DMSO and are stirred at 60 °C for 6 hrs. in order to achieve sufficient swelling of the polymer. After cooling of the suspension to 25 °C 0.18 g (5 % w/w) of 4-(2,2,2-trifluoro-1-diazirinyl-ethyl)-phenylisocyanate and 20 mg of dibutyl-ti-dilaurate are added. The mixture is stirred at 40 °C for 6 hrs. and then precipitated in diethylether. The slightly yellowish product obtained is 3-times extracted with 30 ml of boiling diethylether and then dryed at 0,001 Torr and 40 °C.

### Example K-1: N-methacryloyl-,N'-[4-(2,2,2-trifluoro-1-diazirinyl-ethyl)-benzoyl]-1,3-diaminopropane

In a 3-necked 50-ml brown-glass reaction bottle equipped with magnetic stirr bar, dropping funnel, thermometer and reflux condenser 1 g (3,05 mMoles) of the N-hydroxysuccinamide-ester of 4-[2,2,2-trifluoro-1-(diazirinyl-3)-ethyl]- benzoic acid (prepared according to the procedure outlined in Example E) and 0.546 g (3.05 mMoles) N-(3-aminopropyl)-methacrylamide hydrochloride (APMAH) are suspended under a blanket of dry nitrogen in 20 ml of dry ethyl acetate. Over a period of 10 minutes a solution of 0.310 g (3.06 mMoles) dry triethylamine in 5 ml of ethyl acetate is then added to the mixture. The white suspension formed was stirred at room temperature for 12 hrs., filtered through a glass filter funnel under exclusion of light. After evaporation of the solvent and recrystallization from a THF/n-hexane 1:3 mixture a white crystalline solid is obtained. The structure and the purity of the product is confirmed by the 1 H-NMR spectrum; the signals at 7.25 / 7,9 ppm and 5.38 / 5.78 ppm correspond to the presence of the aromatic ring and of the methacrylic group.

### Example K-2: N-(4-azido-phenyl),N'-(2-methacryloyloxy)-ethyl-urea

Following the procedure outlined in example K-1 2.36 g (13.9 mMoles) of 4-azido-aniline hydrochloride and 2.15 g (13.9 mMoles) of 2-isocyanatoethyl-methacrylate (IEM) are dissolved in 20 ml of dry pyridine. Then 7.03 g (69.5 mMoles) of dry triethylamine are added over a period of 20 minutes, and the mixture is stirred at room temperature for 12 hrs. After cooling to -18 °C the dark suspension formed is filtered, and the solvent is evaporated. The residue is recrystallized from a CH₂Cl₂/ / n-hexane 1:3 mixture to obtain a light-beige colored crystalline product. The 1 H-NMR spectrum confirms the structure of the compound, and it's purity is confirmed by elemental analysis:
Calculated: C 53.97 %, H 5.23 %, N 24.21 %, O 16.59 %
Found:C 53.92 %, H 5.35 %, N 23.83 %, O 16.59 %

### Example K-3:

The procedure of Examples K-1 is repeated using an equivalent amount of 4-azidophenyl-isothiocyanate instead of the compound of Example E.

### Example K-4:

The procedure of Examples K-1 is repeated using an equivalent amount of 4-(2,2,2-trifluoro-1-diazirinyl-ethyl)-phenylisocyanate instead of the compound of Example E.

### Example L-1: Cotelomerization of a photoreactive monomer with N,N-dimethyl acrylamide (DMA)

A 250 ml brown-glas, three-necked reaction flask equipped with thermometer, stirrer, dropping funnel and reflux condenser is carefully purged with Argon and kept under an Argon blanket during the telomerization reaction. The flask is then charged with 10 ml of a degassed solution of 0,36 g (1.25 mMoles) of the azide-containing monomer prepared in example K2, 12.5g (125 mMoles) of DMA, 0.94 g (8.81 mMoles) of cysteamine hydrochloride and 100,4 mg (0,632 mMoles) of AIBN in 70 ml of acetonitrile which has been set to pH-4 using 0.01 N aqueous HCI. After heating the reaction flask to 60 °C the remaining 60 ml of the solution are added to the reaction mixture over a period of 30 minutes while keeping the reaction temperature constant. After 4 hrs. at 60 °C the mixture is cooled to 25°C, filtered through a glass filter funnel, and the solvent is evaporated. The residue is dissolved in 200 ml of dist. water and is then purified by ultrafiltration using a membrane with a cut-off of 1000 Dalton. After lyophilization of the purified solution the co-telomer is obtained as white powder.

### Example L-2: Cotelomerization of a photoreactive monomer with N,N-dimethyl acrylamide (DMA)

Following the procedure outlined in example L-1, 12.5g (125 mMoles) of DMA are co-telomerized with 0.62g (1.25 mMoles) of the diazirine-containing monomer prepared in example K1 and 0.94 g (8,31 mMoles) of cysteamine hydrochloride using 70 ml of toluene as a solvent. After ultrafiltration and lyophilization the co-telomer is obtained as a white powder.

### Example M-1: Synthesis of a Polymerizable photoreactive cotelomer

In a 100 ml brown-glass reaction flask equipped with magnetic stirr bar and Argon inlet 4 g of the diazirine-containing co-telomer prepared in example L-2 are dissolved in 50 ml of dist. water, and 0.45 g of 2-isocyanato-ethyl methycrylate (IEM) are added under vigorous stirring at 5 °C. After setting the pH of the mixture to 10 using 0.1 N aqueous NaOH solution stirring is continued at room temperature for 3 hrs.. The aqueous solution of the macromonomer is then purified by ultrafiltration as described in example L1 and lyophilized. A white powder is obtained. According to the GPC analysis the product shows a number average molecular weight Mₙ of 2800 Dalton and microtitration of of it's aqueous solution proves that the chloride and the amine contents are both below 0.001 mVal. The methacrylic head group of the macomonomer can clearly be identified in the 1 H-NMR spectrum.

### Example M-2: Synthesis of a photoreactive macromonomer

Following the procedure described in example M-1, 4 g of the co-telomer prepared in example L1 are reacted with 0.3 g acryloylchloride. After lyophilization the macromonomer is obtained as a white powder. The number average molecular weight Mₙ of the N-acryloyl-terminated co-telomer is found by GPC analysis to be 2680 Dalton.

### Example M-3 : Synthesis of a photoreactive macromonomer

As outlined in example M-1, 12,5 g of the cotelomer of Example L-2 are reacted with 970 mg of 2-isocyanatoethyl-methacrylate using 25 g dry acetonitrile as a solvent instead of water. 640 mg of triethylamine are added to the reaction mixture for neutralization of the terminal amine hydrochloride function of the cotelomer. After stirring for 8 hrs. at room temperature the total conversion of the isocyanate is confirmed by IR spectroscopy. After precipitation in 250 ml of diethylether the product is obtained as a white powder. For purification the material is dissolved in water and dialysed using a membrane of 1000 Da cut-off. After lyophilization of the remaining clear, colourless solution the white powdery macromonmer containing 1 mole-% diazirine is obtained. Titration of the terminal methacrylic function and GPC analysis show molecular weights of Mₙ ∼ 2200 and M_{w} ∼ 3500.

### Example N-1: Homopolymerization of a photoreactive macromonomer

3.5g of the macromonomer prepared in example M1 and 0.1 g of an aequeous solution of α,α'-azodiisobutyramidine dihydrochloride (10.5 mg / ml) are dissolved in 30 ml of dist.water and then carefully degassed. The mixture is stirred and polymerized at 60°C for 8 hours. The "comb-type" polymer solution obtained is purified from residual macromonomer and from oligomers by ultrafiltration using a membrane with a molecular weight cut-off of 10 000 Dalton. After lyophilization of the aqueous solution a white polymer is obtained. The product is characterized by 1 H-NMR in D₂O, by GPC-analysis with on line light scattering in water. The weight average molecular weight M_{w} of the diazirine-containing comb-type polymer obtained is found to be 155 00 Dalton.

### Examples N-2 - N-3: Copolymerization of a photoreactive macromonomer

Following the procedure outlined in example N-1 the diazirine-containing macromonomer prepared in example M-3 (I) is copolymerized with the DMA macromonomer prepared in example B-2 (II) in different molar ratios as outlined in the Table.

| Ex. No. | Molar Ratio (I) / (II) | Yield | Mₙ; 10⁶ Da | M_{w}; 10⁶ Da |
|---|---|---|---|---|
| N-2 | 50 / 50 | 83 % | 6,3 | 14,7 |
| N-3 | 10 / 90 | 69 % | 9,2 | 19,7 |

### Example O-1-O-5: UV-Linking of a photoreactive comb-type Polymer to a contact lens surface

2g of the diazirine-containing polymer prepared in Example N-1 are dissolved in 50 ml of water (HPLC grade). The solution is used for spray or dip coating of lotrafilcon A contact lenses (Ciba Vision, Atlanta) with subsequent UV-initiated covalent fixation of the photoreactive polymer as described in Examples G1 or G3. The coated contact lenses are then autoclaved for 20 minutes at 121 °C, and the lens surfaces are characterized by measurement of the dynamic contact angles.

| Ex. No. | Dip/Spray | Irradiation time [sec] | Cycles | Contact Angles °adv./ °rec. |
|---|---|---|---|---|
| O-1 | Dip | 60 | 1 | 63/41 |
| O-2 | Dip | 60 | 3 | 16/0 |
| O-3 | Dip | 120 | 3 | 0/0 |
| O-4 | Spray | 60 | 3 | 11/0 |
| O-5 | Spray | 60 | 5 | 0/0 |

### Examples O-6-O-7: UV-Linking of a photoreactive comb polymer to a contact lens surface

Following the procedure outlined in Examples O-1-O-5, 2g of the polymer prepared in Example J are dissolved in water, and the solution is used for the dip / UV -Link coating of lotrafilcon A contact lenses as described in Example G-3. A UV irradiation time of 60 seconds is used.

| Ex. No. | Irradiation time [sec] | Cycles | Contact Angles °adv./ °rec. |
|---|---|---|---|
| O-6 | 60 | 1 | 12/0 |
| O-7 | 60 | 2 | 0/0 |

### Examples O-8 - O-9 : UV-Linking of a photoreactive comb copolymer to a contact lens surface

Using the procedure outlined in examples O6 - O-7 a 5 % w/w aqueous solution of the photoreactive bottlebrush copolymer prepared in example N-3 is employed for the coating of lotrafilcon A contact lenses. The wettability of the lenses after autoclaving is characterized by dynamic contact angle measurements.

| Ex. No | Irradiation Time [sec.] | Cycles | Contact Angles °adv. / °rec. |
|---|---|---|---|
| O-8 | 60 | 1 | 22 / 0 |
| O-9 | 60 | 3 | 17,5 / 1,5 |

## Claims

1. A process for coating a material surface comprising the steps of:
(a) applying to the material surface one or more different comb-type polymers comprising a polymer backbone and side chains pendently attached thereto, wherein at least a part of the side chains carry a triggerable precursor for carbene or nitrene formation; and
(b) fixing the polymer(s) onto the material surface using heat or radiation, in particular radiation such as UV or visible light,
wherein the polymer backbone according to step (a) of the process comprises a polyvinyl homo- or copolymer, a polyethylene imine, a polypeptide, a polyether or a polysaccharide, and the side chains that are attached to the polymer backbone are selected from the group consisting of functional hydrophilic telomers, polyalkylene oxides, oligosaccharides and oligopeptides, and
wherein the comb-type polymer according to step (a) of the process is
(I) a polyvinyl polymer comprising units of the formula 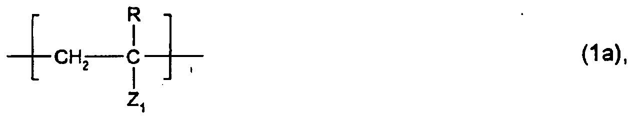 or 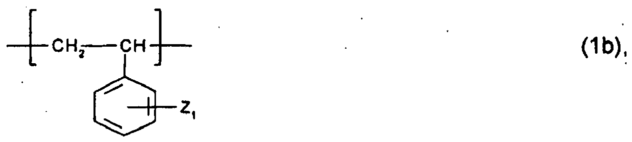 wherein R is hydrogen or C₁-C₄-alkyl and Z₁ is a hydrophilic side chain comprising at least one one triggerable precursor for carbene or nitrene formation and having a weight average molecular weight of ≥ 200; or
(II) a polyethylene imine comprising units of formula 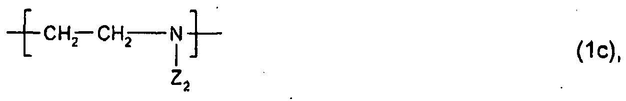 wherein Z₂ is a hydrophilic side chain comprising at least one triggerable precursor for carbene or nitrene formation and having a weight average molecular weight of ≥ 200; or
(III) a polypeptide comprising units of formula 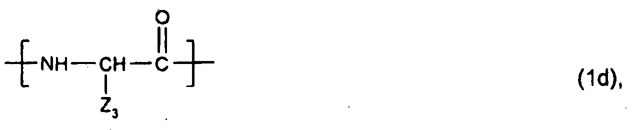 wherein Z₃ is a hydrophilic side chain comprising at least one triggerable precursor for carbene or nitrene formation and having a weight average molecular weight of ≥ 200; or
(IV) a polyether comprising units of formula 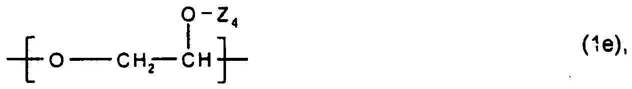 wherein Z₄ is a hydrophilic side chain comprising at least one triggerable precursor for carbene or nitrene formation and having a weight average molecular weight of ≥ 200, or
(V) a polysaccharide comprising saccharide units to which is attached a side chain Z₅ comprising at least one triggerable precursor for carbene or nitrene formation and having a weight average molecular weight of ≥ 200.

2. A process according to claim 1, wherein the comb-type polymer according to step (a) comprises units of formula 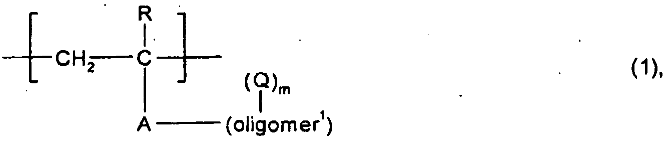 wherein R is hydrogen or C₁-C₄-alkyl;
A is a radical of formula
- C(O) - X - (2a),
- C(O) - O - (CH₂)ᵣ - CH(OH) - CH₂ - X - (2b),
- C(O) - NH - (alk') - C(O) - X - (2c),
- C(O) - O - (alk") - NH - C(O) - X - (2d),
- C(O) - X - (alk") - X₁ - C(O) - (2e),
- C(O) - NH - C(O) - X - (2f),
- (alk"')s - X - D - X₁ - (2g)
- X - (alk') - X₁ - (2h),
- X - C(O) - (2i),
- (alk"') - C(O) - X - (2j)
or
- (alk"') - X - C(O) - (2k),
wherein (alk') is C₁-C₆-alkylene; (alk") is C₂-C₁₂-alkylene; (alk"') is C₁-C₆-alkylene; D is a group -C(O)- or -C(S)- and s is 0 or 1;
X and X₁ are each independently a group -O- or -NR₁-, wherein R₁ is hydrogen or C₁-C₄-alkyl;
(oligomer¹) is the radical of
(i) a hydrophilic telomer which is derived from one or more different copolymerizable vinyl monomers,
(ii) the radical of an oligosaccharide;
(iii) the radical of an oligopeptide; or
(iv) the radical of a polyalkylene oxide;
Q is a radical comprising a triggerable precursor for carbene or nitrene formation;
r is an integer from 1 to 4; and m is an integer ≥ 1.

3. A process according to claim 2, wherein the radical -(oligomer¹)-(Q)ₘ corresponds to a radical of formula 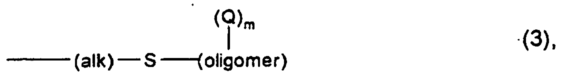 wherein (alk) is C₂-C₆-alkylene and (oligomer)-(Q)ₘ corresponds to formula 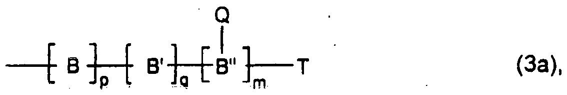 wherein B and B' are each independently of the other a radical of formula 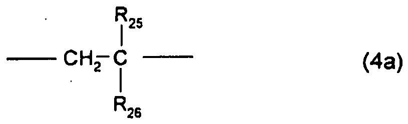 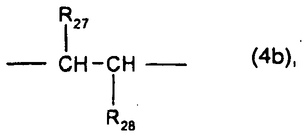 wherein R₂₅ is hydrogen or C₁-C₄-alkyl, R₂₆ is a hydrophilic substituent; R₂₇ is C₁-C₄-alkyl, phenyl or a radical -C(O)OY₉, wherein Y₉ is hydrogen or unsubstituted or hydroxy-substituted C₁-C₄-alkyl; and R₂₈ is a radical -C(O)OY₉' or -CH₂-C(O)OY₉'
wherein Y₉' independently has the meaning of Y₉;
B"-Q is a 1,2-ethylene radical of formula 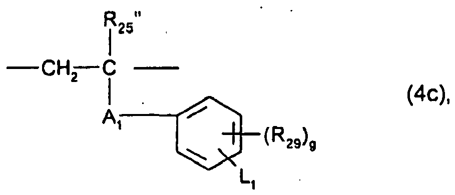 wherein R₂₅" is hydrogen or C₁-C₄-alkyl,
A₁ is a linking member of formula
- C(O) - X' - (6a),
- (CH₂)ₜ - X' - C(O) - (6b),
- C(O) - X' - (Alk) - X₂ - C(O) - (6c),
-(CH₂)ₜ-X'-D₁ -NH- (6d),
- C(O) - X' - (Alk) - X₂ - A₂ - NH - (6e),
or
- (CH₂)ₜ - X' - CH₂ - CH(OH) - CH₂ - (6f),
X' and X₂ are each independently a group -O- or -NR₁'-, R₁' is hydrogen or C₁-C₄-alkyl; D₁ is a group -C(O)- or -C(S)-, (Alk) is C₂-C₁₂-alkylene, t is 0 or 1,
R₂₉ is C₁-C₄-alkyl, C₁-C₄-alkoxy, amino, hydroxy, sulfo, nitro, trifluoromethyl or halogen, g is an integer from 0 to 2,
L₁ is a group of formula 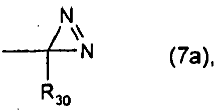 or
-N₃ (7b),
R₃₀ is fluorinated C₁-C₆-alkyl,
p and q are each independently of another an integer from 0 to 250, wherein the total of (p+q) is an integer from 2 to 250, m is an integer from 1 to 3, and
T is a monovalent group that is suitable to act as a polymerization chain-reaction terminator.

4. A process according to claim 3, wherein B and B' are each independently a radical of formula (4a), R₂₅ is hydrogen or methyl, and R₂₆ is a radical -CONH₂, -CON(CH₃)₂, 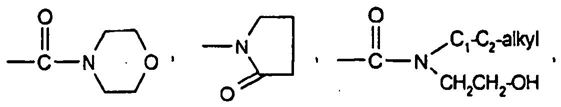 -CONH-(CH₂)₂-OH, -COO(CH₂)₂₋₄-NHC(O)-O-G, wherein -O-G is the radical of trehalose, -COOH, -NH₂, -CH₂-NH₂, -CH₂-N(CH₃)₂, -C(O)NH-(CH₂)₂₋₃-NH₂, -C(O)O-(CH₂)₂₋₃-NH₂, -COO-(CH₂)₂-N(CH₃)₂ or -C(O)O-CH₂-CH(OH)-CH₂-N(CH₃)₃⁺An⁻, wherein An⁻ is an anion.

5. A process according to any one of claims 2 to 4, wherein in the polymer units of formula (1) R is hydrogen or methyl, A is a radical of formula
-C(O)-X- (2a),
- C(O)-O- (alk") - NH - C(O) - X - (2d),
(alk") is C₂-C₄-alkylene; X is -NH-; and (oligomer¹)-(Q)ₘ is a telomer radical of formula 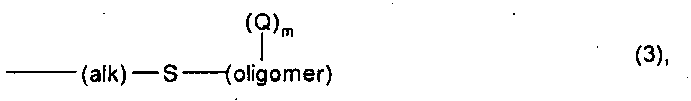 wherein (alk) is C₂-C₄-alkylene and (oligomer)-(Q)ₘ corresponds to formula 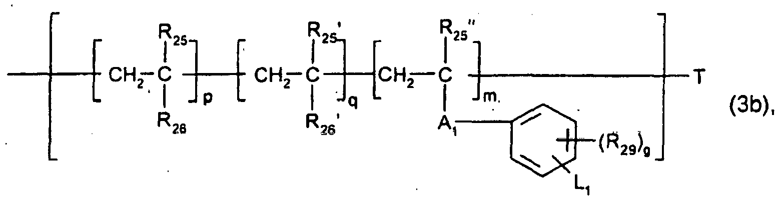 wherein R₂₅, R₂₅' and R₂₅" are each independently hydrogen or methyl, R₂₆ is a radical -CONH₂, -CON(CH₃)₂ or N-pyrrolidonyl, R₂₆' is -NH₂ or -C(O)X'-(Alk)-NH₂, X' is -O- or -NH-, (Alk) is C₂-C₃-alkylene, A₁ is a radical -NH-C(O)- or -C(O)-NH-(CH₂)₂₋₄-NH-C(O)-, g is 0, L₁ is a radical 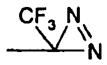 or -N₃, p and q are each independently an integer from 0 to 150, wherein the total of (p+q) is an integer from 2 to 150, m is an integer from 1 to 3, and T is a monovalent group that is suitable to act as a polymerization chain-reaction terminator.

6. A process according to any one of claims 1 to 5, wherein the comb-type polymer according to step (a) is a polymer comprising units of formula 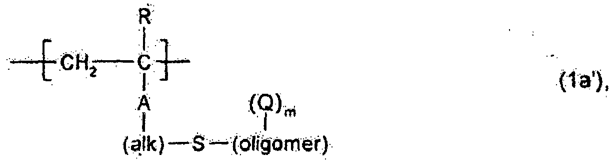 and optionally 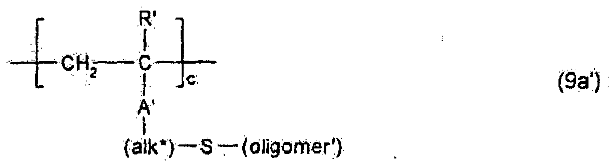 or 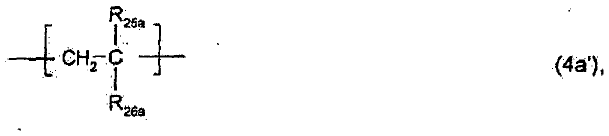 wherein R, R' and R₂₅ₐ are each independently hydrogen or methyl, R₂₆ₐ is a radical -CONH₂, -CON(CH₃)₂ or N-pyrrolidonyl, A and A' are each independently a radical of
the above formula (2a), (2c), (2d), (2i) or (2k) given in claim 2, wherein X is a group -O-or -NH-,
(alk)" is C₂-C₄-alkylene, (alk') is a radical -CH₂- or -C(CH₃)₂-, and (alk"') is C₁-C₂-alkyene,
(alk) and (alk*) are each independently C₂-C₄-alkylene,
(oligamer)-(Q)ₘ is a radical of formula (3b) according to claim 7, and
(oligomer') is a radical of formula 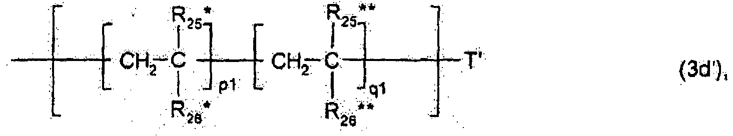 wherein R₂₅* and R₂₅** are each independently hydrogen or methyl, R₂₆* and R₂₆** are each independently a radical -CONH₂, -CON(CH₃)₂ or N-pyrrolidonyl, p1 and q1 are each independently an integer of from 0 to 150 and the total of (p1+q1) is an integer from 2 to 150, and T' is a monovalent group that is suitable to act as a polymerization chain-reaction terminator.

7. A process according to any one of claims 1 to 6, wherein the material surface to be coated is the surface of a biomedical device, particularly a contact lens, intraocular lens or artificial cornea.

8. A composite material comprising
(i) an inorganic or organic bulk material; and
(ii) a hydrophilic surface coating obtainable by the process according to any one of claims 1 to 7.

9. A biomedical article, particularly a contact lens, intraocular lens or artificial cornea, comprising a surface coating that is obtainable by fixing a polymer comprising units of formula (1a), (1b), (1c) or (1d) according to claim 1 onto its surface by the action of heat or radiation.

10. Use of a comb-type polymer comprising a polymer backbone and side chains pendently attached thereto, wherein at least a part of the side chains carry a triggerable precursor for carbene or nitrene formation for the modification of a material surface, in particular of a surface of a biomedical article.

## Patentansprüche

1. Ein Verfahren zur Beschichtung einer Materialoberfläche, umfassend die Schritte:
(a) Aufbringen von einem oder mehreren verschiedenen kammartigen Polymeren, umfassend ein Polymergrundgerüst und anhängend daran befestigte Seitenketten, auf die Materialoberfläche, worin mindestens ein Teil der Seitenketten einen auslösbaren Vorläufer für Carben- oder Nitrenbildung tragen; und
(b) Befestigen des Polymers oder der Polymeren an der Materialoberfläche unter Verwendung von Hitze oder Strahlung, insbesondere von Strahlung wie etwa UV oder sichtbares Licht, worin das Polymergrundgerüst gemäss Schritt a) des Verfahrens ein Polyvinyl-Homo- oder -Copolymer, ein Polyethylenimin, ein Polypeptid, einen Polyether oder ein Polysaccharid umfasst, und die Seitenketten, die an das Polymergrundgerüst befestigt sind, aus der Gruppe ausgewählt sind, die aus funktionellen hydrophilen Telomeren, Polyalkylenoxiden, Oligosacchariden und Oligopeptiden besteht, und
worin das kammartige Polymer gemäss Schritt (a) des Verfahrens
(I) ein Polyvinylpolymer ist, das Einheiten der Formel 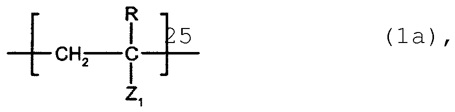 oder 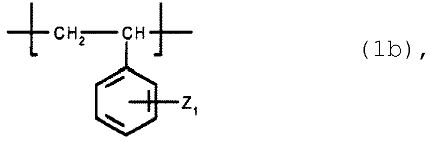 umfasst, worin R Wasserstoff oder C₁-C₄-Alkyl ist und Z₁ eine hydrophile Seitenkette ist, die mindestens einen auslösbaren Vorläufer für Carben- oder Nitrenbildung umfasst und ein gewichtsgemitteltes Molekulargewicht von ≥ 200 aufweist; oder
(II) ein Polyethylenimin ist, das Einheiten der Formel 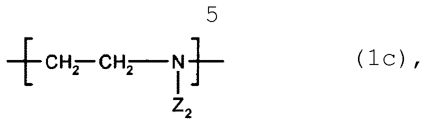 umfasst, worin Z₂ eine hydrophile Seitenkette ist, die mindestens einen auslösbaren Vorläufer für Carben- oder
Nitrenbildung umfasst und ein gewichtsgemitteltes Molekulargewicht von 200 aufweist; oder
(III) ein Polypeptid ist, das Einheiten der Formel 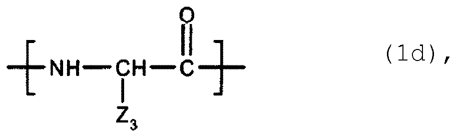 umfasst, worin Z₃ eine hydrophile Seitenkette ist, die mindestens einen auslösbaren Vorläufer für Carben- oder
Nitrenbildung umfasst und ein gewichtsgemitteltes Molekulargewicht von ≥ 200 aufweist; oder
(IV) ein Polyether ist, das Einheiten der Formel 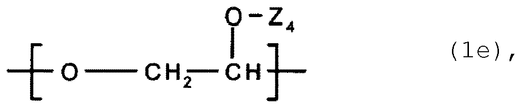 umfasst, worin Z₄ eine hydrophile Seitenkette ist, die mindestens einen auslösbaren Vorläufer für Carben- oder
Nitrenbildung umfasst und ein gewichtsgemitteltes Molekulargewicht von ≥ 200 aufweist; oder
(V) ein Polysaccharid, das Saccharideinheiten umfasst, an die eine Seitenkette Z₅ befestigt ist, die mindestens einen auslösbaren Vorläufer für Carben- oder Nitrenbildung umfasst und ein gewichtsgemitteltes Molekulargewicht von ≥ 200 aufweist.

2. Ein Verfahren nach Anspruch 1, worin das kammartige Polymer gemäss Schritt (a) Einheiten der Formel 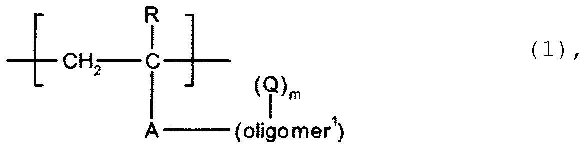 umfasst, worin R Wasserstoff oder C₁-C₄-Alkyl ist;
A ein Rest der Formel
-C(0)-X- (2a),
-C(O)-O-(CH₂)ᵣ-CH(OH)-CH₂-X- (2b),
-C(0)-NH-(alk')-C(0)-X- (2c),
-C(O)-O-(alk")-NH-C(O)-X- (2d),
-C(O)-X-(alk")-X₁-C(O)- (2e),
-C(O)-NH-C(O)-X- (2f),
-(alk")ₛ-X-D-X₁- (2g),
-X-(alk')-X₁- (2h),
-X-C(O)- (2i),
-(alk"')-C(O)-X- (2j)
oder
-(alk"')-X-C(O)- (2k)
ist, worin (alk') C₁-C₆-Alkylen ist; (alk") C₂-C₁₂-Alkylen ist; (alk"') C₁-C₆-Alkylen ist; D eine Gruppe -C(0)- oder - C(S)- ist und s 0 oder 1 ist;
X und X₁ je unabhängig eine Gruppe -0- oder -NR₁- sind, worin R₁ Wasserstoff oder C₁-C₄-Alkyl ist;
(oligomer¹) der Rest von
(i) einem hydrophilen Telomer ist, das von einem oder mehreren verschiedenen copolymerisierbaren Vinylmonomeren abgeleitet ist,
(ii) der Rest von einem Oligosaccharid;
(iii) der Rest von einem Oligopeptid; oder
(iv) der Rest von einem Polyalkylenoxid ist;
Q ein Rest ist, der einen auslösbaren Vorläufer für Carben- oder Nitrenbildung umfasst;
r eine ganze Zahl von 1 bis 4 ist; und m eine ganze Zahl ≥ 1 ist.

3. Ein Verfahren nach Anspruch 2, worin der Rest -(oligomer¹)-(Q)ₘ einem Rest der Formel 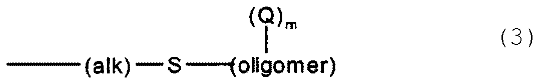 entspricht, worin (alk) C₂-C₈-Alkylen ist und (oligomer¹)-(Q)ₘ der Formel 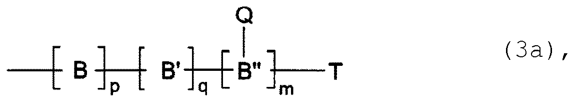 entspricht, worin B und B' je unabhängig vom anderen ein Rest der Formel 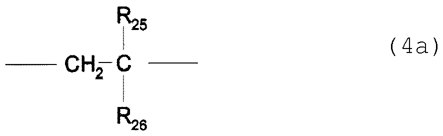 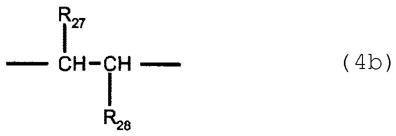 sind, worin R₂₅ Wasserstoff oder C₁-C₄-Alkyl ist, R₂₆ ein hydrophiler Substituent ist; R₂₇ C₁-C₄-Alkyl, Phenyl oder ein Rest -C(O)OY₉ ist, worin Y₉ Wasserstoff oder unsubstituiertes oder hydroxy-substituiertes C₁-C₄-Alkyl ist; und R₂₈ ein Rest -C(O)OY₉' oder -CH₂-C(O)OY₉' ist, worin Y₉' unabhängig die Bedeutung von Y₉ hat;
B''-Q ein 1,2-Ethylenrest der Formel 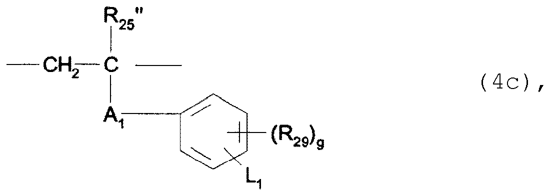 ist, worin R_{28''} Wasserstoff oder C₁-C₄-Alkyl ist,
A₁ ein Verbindungsglied der Formel
-C(O)-X'- (6a),
-(CH₂)ₜ-X'-C(O)- (6b),
-C(O)-X'-(Alk)-X₂-C(O)- (6c),
-(CH₂)ₜ-X'-D₁-NH- (6d),
-C(O)-X'-(Alk)-X₂-A₂-NH- (6e)
oder
-(CH₂)ₜ-X'-CH₂-CH(OH)-CH₂- (6f)
ist,
X' und X₂ je unabhängig eine Gruppe -0- oder -NR₁'- sind, R₁' Wasserstoff oder C₁-C₄-Alkyl ist; D₁ eine Gruppe -C(O)- oder - C(S)- ist, (Alk) C₂-C₁₂-Alkylen ist, t 0 oder 1 ist,
R₂₉ C₁-C₄-Alkyl, C₁-C₄-Alkoxy, Amino, Hydroxy, Sulfo, Nitro, Trifluormethyl oder Halogen ist,
g eine ganze Zahl von 0 bis 2 ist,
L eine Gruppe der Formel 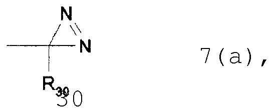
oder -N₃ (7b)
ist,
R₃₀ fluoriertes C₁-C₆-Alkyl ist,
p und q je unabhängig voneinander eine ganze Zahl von 0 bis 250 sind, worin das Total von (p+q) eine ganze Zahl von 2 bis 250 ist, m eine ganze Zahl von 1 bis 3 ist, und
T eine monovalente Gruppe ist, die geeignet ist, als ein Polymerisations-Kettenreaktions-Terminator zu wirken.

4. Ein Verfahren nach Anspruch 3, worin B und B' je unabhängig ein Rest der Formel (4a), R₂₈ Wasserstoff oder Methyl, und R₂₆ ein Rest -CONH₂, -CON(CH₃)₂, 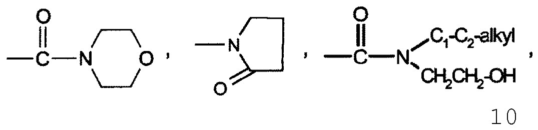 -CONH-(CH₂)₂-OH, -COO(CH₂)₂₋₄-NHC(O)-O-G, worin -O-G der Rest von Trehalose ist, -COOH, -NH₂, -CH₂-NH₂, -CH₂-N(CH₃)₂, -C(O)NH-(CH₂)₂₃₋NH₂, -C(O)O-(CH₂)₂₋₃-NH₂, -COO-(CH₂)₂-N(CH₃)₂ oder -C(O)O-CH₂-CH(OH)-CH₂-N(CH₃)₃⁺ An⁻, worin An⁻ ein Anion ist, ist.

5. Ein Verfahren nach irgend einem der Ansprüche 2 bis 4, worin in den Polymereinheiten von Formel (1) R Wasserstoff oder Methyl ist, A ein Rest der Formel
-C(0)-X- (2a),
-C(O)-O-(alk'')-NH-C(O)-X- (2d)
ist, (alk") C₂-C₈-Alkylen ist, X -NH- ist und (oligomer¹)-(Q)ₘ ein Telomerrest der Formel 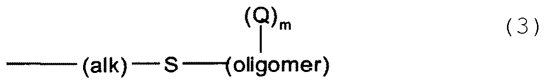 ist, worin (alk) C₂-C₄-Alkylen ist und (oligomer)-(Q)ₘ der Formel 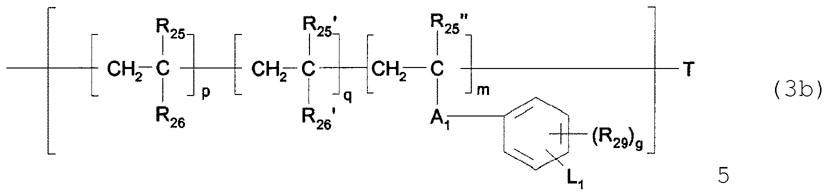 entspricht, worin R₂₅, R₂₅' und R₂₅" je unabhängig Wasserstoff oder Methyl sind, R₂₆ ein Rest -CONH₂, -CON(CH₃)₂ oder N-pyrrolidonyl ist, R₂₆' -NH₂ oder -C(O)X'-(Alk)-NH₂ ist, X' -O- oder -NH- ist, (Alk) C₂-C₃-Alkylen ist, A₁ ein Rest -NH-C(O)- oder -C(O)-NH-(CH₂)₂₋₄-NH-C(O)- ist, g 0 ist, L₁
ein Rest 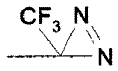 oder -N₃ ist, p und q je unabhängig eine ganze Zahl von 0 bis 150 sind, worin das Total von (p+q) eine ganze Zahl von 2 bis 150 ist, m eine ganze Zahl von 1 bis 3 ist, und T eine monovalente Gruppe ist, die geeignet ist, als ein Polymerisations-Kettenreaktions-Terminator zu wirken.

6. Ein Verfahren nach irgend einem der Ansprüche 1 bis 5, worin das kammartige Polymer gemäss Schritt (a) ein Polymer ist, das Einheiten der Formel 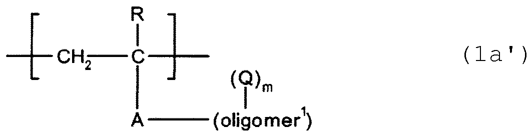 und gewünschtenfalls 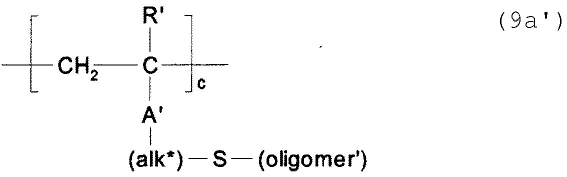 oder 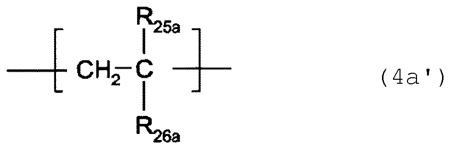 umfasst, worin R, R' und R₂₅ₐ je unabhängig Wasserstoff oder Methyl sind, R₂₆ₐ ein Rest -CONH₂, -CON(CH₃)₂ oder N-pyrrolidonyl ist, A und A' je unabhängig ein Rest der obigen, in Anspruch 2 angegebenen Formel (2a), (2c), (2d), (2i) oder (2k) sind, worin X ein Gruppe -0- oder -NH- ist,
(alk)'' C₂-C₄-Alkylen ist, (alk') ein Rest -CH₂- oder -C(CH₃)₂- ist, und (alk''') C₁-C₂-Alkylen ist,
(alk) und (alk*) je unabhängig C₂-C₄-Alkylen sind,
(oligomer)-(Q)ₘ ein Rest der Formel (3b) gemäss Anspruch 7 ist, und
(oligomer') ein Rest der Formel 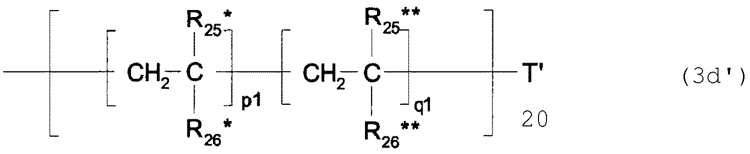 ist, worin R₂₅* und R₂₅** je unabhängig Wasserstoff oder Methyl sind, R₂₆* und R₂₆** je unabhängig ein Rest-CONH₂, -CON(CH₃)₂ oder N-pyrrolidonyl sind, p1 und q1 je unabhängig eine ganze Zahl von 0 bis 150 sind und das Total von (p1+q1) eine ganze Zahl von 2 bis 150 ist, und T' eine monovalente Gruppe ist, die geeignet ist, als ein Polymerisations-Kettenreaktions-Terminator zu wirken.

7. Ein Verfahren nach irgend einem der Ansprüche 1 bis 6, worin die zu beschichtende Materialoberfläche die Oberfläche einer biomedizinischen Vorrichtung, insbesondere einer Kontaktlinse, intraokularen Linse oder künstlichen Hornhaut, ist.

8. Ein Verbundmaterial umfassend
(i) ein anorganisches oder organisches Grundmaterial, und
(ii) eine hydrophile Oberflächenbeschichtung, die mittels des Verfahrens nach irgend einem der Ansprüche 1 bis 7 erhältlich ist.

9. Ein biomedizinischer Artikel, insbesondere eine Kontaktlinse, intraokulare Linse oder künstliche Hornhaut, umfassend eine Oberflächenbeschichtung, die erhältlich ist, indem auf seine Oberfläche mittels der Einwirkung von Hitze oder Strahlung ein Polymer befestigt wird, das Einheiten der Formel (1a), (1b), (1c) oder (1d) gemäss Anspruch 1 umfasst.

10. Verwendung eines kammartigen Polymers, umfassend ein Polymergrundgerüst und anhängend daran befestigte Seitenketten, worin mindestens ein Teil der Seitenketten einen auslösbaren Vorläufer für Carben- oder Nitrenbildung tragen, zur Modifikation einer Materialoberfläche, insbesondere einer Oberfläche eines biomedizinischen Artikels.

## Revendications

1. Procédé de revêtement d'une surface de matériau comprenant les étapes qui consistent à :
(a) appliquer à la surface d'un matériau un ou plusieurs polymères en forme de peigne différents comprenant un squelette de polymère et des chaînes latérales latéralement liées à celui-ci, au moins une partie des chaînes latérales portant un précurseur déclenchable de formation de carbène ou de nitrène ; et à
(b) fixer le ou les polymère(s) à la surface du matériau au moyen de chaleur ou d'un rayonnement, en particulier d'un rayonnement tel que UV ou lumière visible,
le squelette de polymère selon l'étape (a) du procédé comprenant un homo- ou copolymère de polyvinyle, une polyéthylèneimine, un polypeptide, un polyéther ou un polysaccharide, et les chaînes latérales qui sont liées au squelette de polymère étant choisies dans le groupe constitué par les télomères hydrophiles fonctionnels, les oxydes de polyalkylène, les oligosaccharides et les oligopeptides, et
le polymère en forme de peigne selon l'étape (a) du procédé étant
(I) un polymère polyvinylique comprenant des motifs de formule 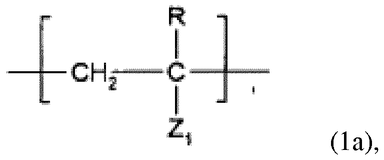 ou 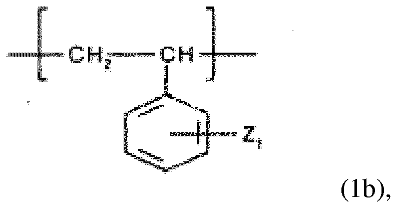 dans laquelle R est un atome d'hydrogène ou un alkyle en C₁-C₄ et Z₁ est une chaîne latérale hydrophile comprenant au moins un précurseur déclenchable de formation de carbène ou de nitrène et ayant une masse moléculaire moyenne en poids ≥ 200 ; ou
(II) une polyéthylèneimine comprenant des motifs de formule 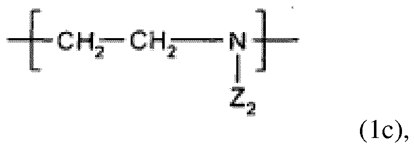 dans laquelle Z₂ est une chaîne latérale hydrophile comprenant au moins un précurseur déclenchable de formation de carbène ou de nitrène et ayant une masse moléculaire moyenne en poids ≥ 200 ; ou
(III) un polypeptide comprenant des motifs de formule 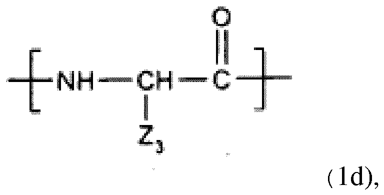 dans laquelle Z₃ est une chaîne latérale hydrophile comprenant au moins un précurseur déclenchable de formation de carbène ou de nitrène et ayant une masse moléculaire moyenne en poids ≥ 200 ; ou
(IV) un polyéther comprenant des motifs de formule 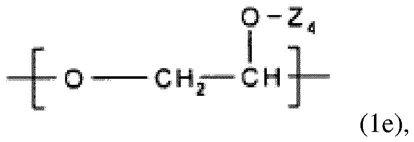 dans laquelle Z₄ représente une chaîne latérale hydrophile comprenant au moins un précurseur déclenchable de formation de carbène ou de nitrène et ayant une masse moléculaire moyenne en poids ≥ 200 ; ou
(V) un polysaccharide comprenant des motifs saccharidiques auquel est liée une chaîne latérale Z₅ comprenant au moins un précurseur déclenchable de formation de carbène ou de nitrène et ayant une masse moléculaire moyenne en poids ≥ 200.

2. Procédé selon la revendication 1, dans lequel le polymère en forme de peigne selon l'étape (a) comprend des motifs de formule 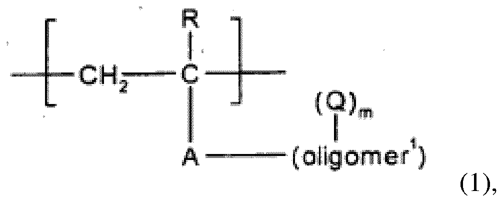 dans laquelle R est un atome d'hydrogène ou un alkyle en C₁-C₄ ;
A est un radical de formule
-C(O)-X- (2a),
-C(O)-O-(CH₂)ᵣ-CH(OH)-CH₂-X- (2b),
-C(O)-NH-(alk')-C(O)-X- (2c),
-C(O)-O-(alk")-NH-C(O)-X- (2d),
-C(O)-X-(alk")-X₁-C(O)- (2e),
-C(O)-NH-C(O)-X- (2f),
-(alk'")ₛ-X-D-X₁- (2g),
-X-(alk')-X₁- (2h),
-X-C(O)- (2i),
-(alk"')-C(O)-X- (2j)
ou
-(alk"')-X-C(O)- (2k),
dans laquelle (alk') est un alkylène en C₁-C₆ ; (alk") est un alkylène en C₂-C₁₂, (alk"') est un alkylène en C₁-C₆ ; D est un groupe -C(O)- ou -C(S)- et s est égal à 0 ou à 1 ;
X et X₁ sont, chacun indépendamment, un groupe -O- ou -NR₁-, dans lequel
R₁ est un atome d'hydrogène ou un alkyle en C₁-C₄ ; (oligomer¹) est
(i) le radical d'un télomère hydrophile qui est formé à partir d'un ou de plusieurs monomères vinyliques copolymérisables différents,
(ii) le radical d'un oligosaccharide ;
(iii) le radical d'un oligopeptide ; ou
(iv) le radical d'un oxyde de polyalkylène ;
Q est un radical comprenant un précurseur déclenchable de formation de carbène ou de nitrène ;
r est un nombre entier de 1 à 4 ; et m est un nombre entier ≥ 1.

3. Procédé selon la revendication 2, dans lequel le radical -(oligomer¹)-(Q)ₘ correspond à un radical de formule 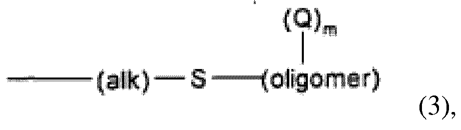 dans laquelle (alk) est un alkylène en C₂-C₆ et (oligomer)-(Q)ₘ correspond à la formule 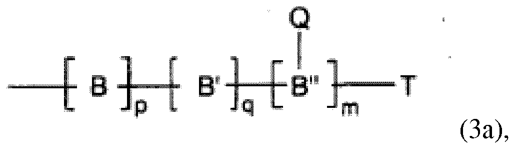 dans laquelle B et B' sont, chacun indépendamment de l'autre, un radical de formule 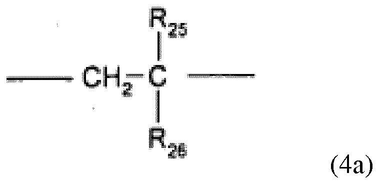 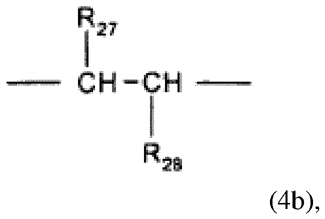 dans laquelle R₂₅ est un atome d'hydrogène ou un alkyle en C₁-C₄, R₂₆ est un substituant hydrophile ; R₂₇ est un alkyle en C₁-C₄, un phényle ou un radical-C(O)OY₉, dans lequel Y₉ est un atome d'hydrogène ou un alkyle en en C₁-C₄ non substitué ou substitué par un hydroxy ; et R₂₈ est un radical-C(O)OY₉' ou -CH₂-C(O)OY₉', dans lequel Y₉' indépendamment a la signification de Y₉ ;
B"-Q est un radical 1,2-éthylène de formule 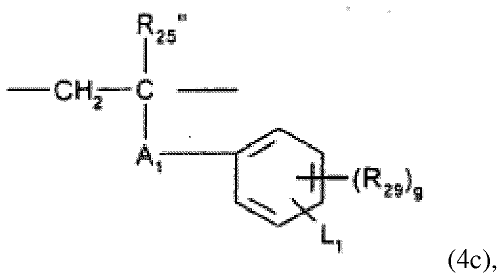 dans laquelle R₂₅" est un atome d'hydrogène ou un alkyle en C₁-C₄,
A₁ est un segment de liaison de formule
-C(O)-X'- (6a),
-(CH₂)ₜ-X'-C(O)- (6b),
-C(O)-X'-(Alk)-X₂-C(O)- (6c),
-(CH₂)ₜ-X'-D₁-NH- (6d),
-C(O)-X'-(Alk)-X₂-A₂-NH- (6e),
ou
-(CH₂)ₜ-X'-CH₂-CH(OH)-CH₂- (6f),
X' et X₂ étant, chacun indépendamment, un groupe -O- ou -NR₁'-, R₁' pétant un atome d'hydrogène ou un alkyle en C₁-C₄; D₁ étant un groupe -C(O)- ou -C(S)-, (Alk) étant un alkylène en C₂-C₁₂, t étant égal à 0 ou à 1,
R₂₉ est un alkyle en C₁-C₄, un alcoxy en C₁-C₄, un amino, un hydroxy, un sulfo, un nitro, un trifluorométhyle ou un halogène,
g est un nombre entier de 0 à 2,
L₁ est un groupe de formule 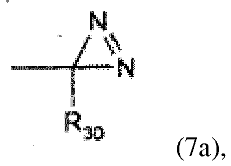 ou -N₃ (7b),
R₃₀ étant un alkyle en C₁-C₆ fluoré,
p et q sont, chacun indépendamment de l'autre, un nombre entier de 0 à 250, le total de (p + q) étant un nombre entier de 2 à 250, m est un nombre entier de 1 à 3, et
T est un groupe monovalent qui est approprié pour faire office de terminateur de réaction en chaîne de polymérisation.

4. Procédé selon la revendication 3, dans lequel B et B' sont, chacun indépendamment, un radical de formule (4a), R₂₅ est un atome d'hydrogène ou un méthyle, et R₂₆ est un radical -CONH₂, -CON(CH₃)₂, 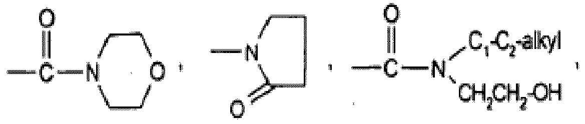 **-CONH-(CH₂)₂-OH,** -COO(CH₂)₂₋₄-NHC(O)-OG, dans lequel -O-G est le radical du tréhalose,-COOH, -NH₂, -CH₂-NH₂, -CH₂-N(CH₃)₂, -C(O)NH-(CH₂)₂₋₃-NH₂, -C(O)O-(CH₂)₂₋₃-NH₂, -COO-(CH₂)₂-N(CH₃)₂ ou -C(O)O-CH₂-CH(OH)-CH₂-N(CH₃)₃⁺An⁻, dans lequel An⁻ est un anion.

5. Procédé selon l'une quelconque des revendications 2 à 4, dans lequel, dans les motifs de polymère de formule (1), R est un atome d'hydrogène ou un méthyle, A est un radical de formule
-C(O)-X- (2a),
-C(O)-O-(alk")-NH-C(O)-X- (2d),
(alk") est un alkylène en C₂-C₄ ; X est -NH- ; et (oligomer¹)-(Q)ₘ est un radical télomère de formule 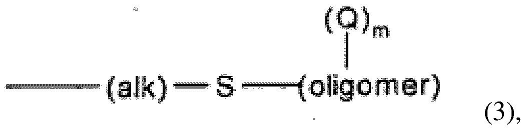 dans laquelle (alk) est un alkylène en C₂-C₄ et (oligomer)-(Q)ₘ correspond à la formule 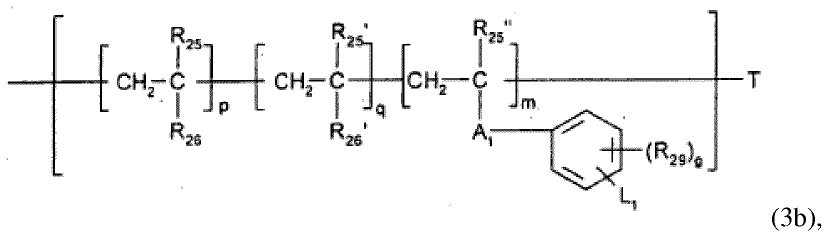 dans laquelle R₂₅, R₂₅' et R₂₅" sont, chacun indépendamment, un atome d'hydrogène ou un méthyle, R₂₆ est un radical -CONH₂, -CON(CH₃)₂ ou N-pyrrolidonyle, R₂₆' est un groupe-NH₂ ou -C(O)X'-(Alk)-NH₂, X' est -O- ou -NH-, (Alk) est un alkylène en C₂-C₃, A₁ est un radical -NH-C(O)- ou - C(O)-NH-(CH₂)₂₋₄-NH-C(O)-, g est égal à 0, L₁ est un radical 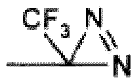 ou -N₃, p et q sont, chacun indépendamment, un nombre entier de 0 à 150, le total de (p + q) étant un nombre entier de 2 à 150, m est un nombre entier de 1 à 3, et T est un groupe monovalent qui est approprié pour faire office de terminateur de réaction en chaîne de polymérisation.

6. Procédé selon l'une quelconque des revendications 1 à 5, dans lequel le polymère en forme de peigne selon l'étape (a) est un polymère comprenant des motifs de formule 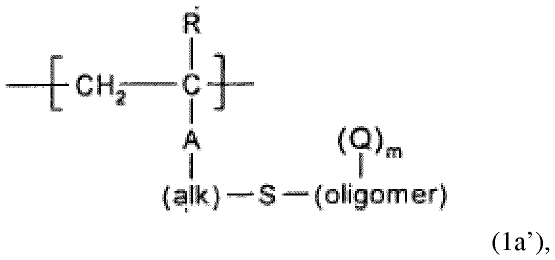 et éventuellement 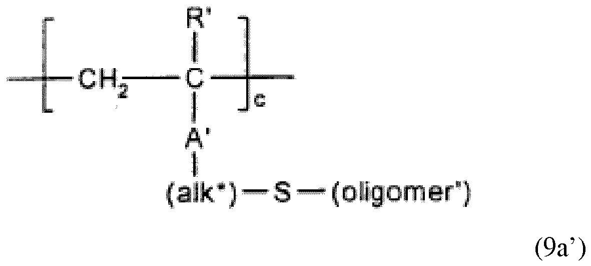 ou 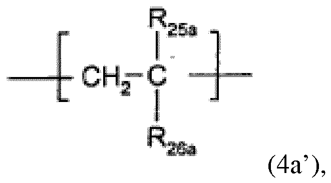 dans lesquelles R, R' et R₂₅ₐ sont, chacun indépendamment, un atome d'hydrogène ou un méthyle, R₂₆ₐ est un radical -CONH₂, -CON(CH₃)₂ ou N-pyrrolidonyle, A et A' sont, chacun indépendamment, un radical de formule (2a), (2c), (2d), (2i) ou (2k) donnée ci-dessus à la revendication 2, dans laquelle X est un groupe -O- ou -NH-,
(alk") est un alkylène en C₂-C₄, (alk') est un radical -CH₂- ou -C(CH₃)₂-, et (alk"') est un alkylène en C₁-C₂,
(alk) et (alk*) sont, chacun indépendamment, un alkylène en C₂-C₄,
(oligomer)-(Q)ₘ est un radical de formule (3b) selon la revendication 7, et
(oligomer') est un radical de formule 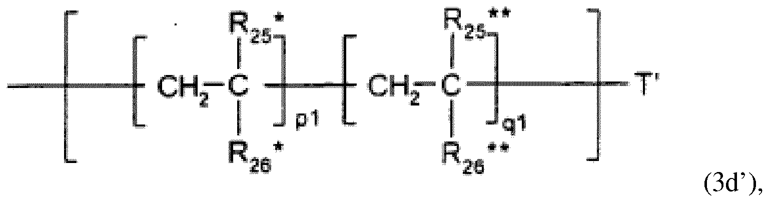 dans laquelle R₂₅* et R₂₅** sont, chacun indépendamment, un atome d'hydrogène ou un méthyle, R₂₆* et R₂₆** sont, chacun indépendamment, un radical -CONH₂, -CON(CH₃)₂ ou N-pyrrolidonyle, p1 et q1 sont, chacun indépendamment, un nombre entier de 0 à 150 et le total de (p1 + q1) est un nombre entier de 2 à 150, et T' est un groupe monovalent qui est approprié pour faire office de terminateur de réaction en chaîne de polymérisation.

7. Procédé selon l'une quelconque des revendications 1 à 6, dans lequel la surface de matériau à revêtir est la surface d'un dispositif biomédical, en particulier d'une lentille de contact, d'une lentille intraoculaire ou d'une cornée artificielle.

8. Matériau composite comprenant
(i) un matériau inorganique ou organique en vrac ; et
(ii) un revêtement de surface hydrophile pouvant être obtenu par le procédé selon l'une quelconque des revendications 1 à 7.

9. Article biomédical, en particulier lentille de contact, lentille intraoculaire ou cornée artificielle, comprenant un revêtement de surface que l'on peut obtenir en fixant un polymère comprenant des motifs de formule (1a), (1b), (1c) ou (1d) selon la revendication 1 sur sa surface sous l'action de la chaleur ou d'un rayonnement.

10. Utilisation d'un polymère en forme de peigne comprenant un squelette de polymère et des chaînes latérales latéralement liées à celui-ci, dans lequel au moins une partie des chaînes latérales portent un précurseur déclenchable de formation de carbène ou de nitrène pour la modification d'une surface d'un matériau, en particulier d'une surface d'un article biomédical.
